# EUROPEAN PATENT APPLICATION

(11) **EP 4 478 759 A1**
(43) Date of publication of application: **18.12.2024**
(21) Application number: 23777931.9
(22) Date of filing: 21.03.2023
(51) Int. Cl.: H04W 12/00

(54) **COMMUNICATION METHOD AND APPARATUS**

(30) Priority: 31.03.2022 CN 202210336337
(71) Applicant: Huawei Technologies Co., Ltd., Shenzhen, Guangdong 518129 (CN)
(72) Inventor: WU, Yizhuang, Shenzhen, Guangdong 518129 (CN); CUI, Yang, Shenzhen, Guangdong 518129 (CN)
(74) Representative: Gill Jennings & Every LLP
(86) International application number: PCT/CN2023/082898
(87) International publication number: WO 2023/185558

(57) **Abstract**

This application provides a communication method and apparatus, to reduce a risk of user plane data exposure. In the communication method, after an IPsec connection is established between a first user plane network element and a terminal, the terminal or the first user plane network element may be used as an endpoint device on the IPsec connection. In this case, when transmission of user plane data protected by IPsec is performed between endpoint devices, an intermediate transmission device (for example, an access network device) located between the endpoint devices, that is, an access network device on the IPsec connection, may directly perform transparent transmission of the user plane data. This reduces the risk of the user plane data exposure. The IPsec connection may be a secure connection established according to an IPsec protocol, in other words, an IPsec child security association SA established between the first user plane network element and the terminal.

## Description

This application claims priority to Chinese Patent Application No. 202210336337.4, filed with the China National Intellectual Property Administration on March 31, 2022 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

In a new radio (new radio, NR) system, a radio access network (radio access network, RAN) device may enable user plane security protection between the RAN device and a terminal. For example, the RAN device may obtain a user plane security policy of the terminal from a session management function (session management function, SMF) network element via a protocol data unit (protocol data unit, PDU) session establishment procedure. The user plane security policy may include enabling required ("required"), enabling preferred ("preferred"), and enabling not needed ("not needed"). When the user plane security policy is enabling required or enabling preferred, the RAN device may enable the user plane security protection between the RAN device and the terminal, to ensure that user plane data between the RAN device and the terminal can be protected, and ensure communication security.

However, when the RAN device is deployed in a physically insecure area, malicious behavior of an attacker may still cause user plane data exposure.

### SUMMARY

Embodiments of this application provide a communication method and apparatus, to reduce a risk of user plane data exposure.

To achieve the foregoing objective, this application uses the following technical solutions.

According to a first aspect, a communication method is provided. The communication method includes: A session management network element determines a user plane security rule, and sends the user plane security rule to a first user plane network element. The user plane security rule is used to establish an internet protocol security IPsec connection between the first user plane network element and a terminal.

It may be learned from the method according to the first aspect that, after the IPsec connection is established between the first user plane network element and the terminal, the terminal or the first user plane network element may be used as an endpoint device on the IPsec connection. In this case, when transmission of user plane data protected by IPsec is performed between endpoint devices, an intermediate transmission device (for example, an access network device) located between the endpoint devices, that is, an access network device on the IPsec connection, may directly perform transparent transmission of the user plane data. This reduces a risk of user plane data exposure.

The IPsec connection may be a secure connection established according to an IPsec protocol, in other words, an IPsec child security association SA established between the first user plane network element and the terminal.

In a possible design solution, the access network device on the IPsec connection does not enable user plane security protection of the terminal. For example, the session management network element sends a user plane security policy to the access network device. The user plane security policy indicates the access network device not to enable user plane encryption and integrity protection of the terminal. In this way, load of the access network device can be reduced, and available resources can be increased.

In a possible design solution, that a session management network element determines a user plane security rule includes: The session management network element determines the user plane security rule based on a radio access technology type of the terminal. In other words, for terminals of different radio access technology types, the session management network element may choose to provide or not to provide the user plane security rule, to implement differentiated services and match requirements of the terminals.

Optionally, that the session management network element determines the user plane security rule based on a radio access technology type of the terminal includes: The session management network element determines the user plane security rule when the radio access technology type is a satellite access type. In other words, in a scenario in which the access network device is deployed on a satellite, the user plane security rule may be provided, to establish the IPsec connection between the first user plane network element and the terminal. This reduces load of the satellite and improves a service life.

In a possible design solution, that a session management network element determines a user plane security rule includes: The session management network element determines the user plane security rule based on a radio access technology type of the terminal and a user plane security policy of the terminal. In other words, for terminals of different radio access technology types, the session management network element may choose, according to the user plane security policy, to provide or not to provide the user plane security rule, to implement differentiated services and match requirements of the terminals.

Optionally, that the session management network element determines the user plane security rule based on a radio access technology type of the terminal and a user plane security policy of the terminal includes: The session management network element determines the user plane security rule when the radio access technology type is a satellite access type and the user plane security policy of the terminal is that the user plane security protection is determined to be enabled. In other words, in a scenario in which the access network device is deployed on a satellite, when the user plane security protection is needed for a session, the user plane security rule may be provided, to establish the IPsec connection between the first user plane network element and the terminal. This reduces load of the satellite and improves a service life.

In a possible design solution, that a session management network element determines a user plane security rule includes: The session management network element determines the user plane security rule based on security indication information. The security indication information indicates to use the IPsec connection to protect the user plane data. In other words, the session management network element may choose, based on a type of the indication information, to provide or not to provide the user plane security rule. For example, the session management network element may choose, based on the security indication information, to provide the user plane security rule, or choose, based on another type of indication information, not to provide the user plane security rule, to implement differentiated services and match requirements of terminals.

In a possible design solution, that a session management network element determines a user plane security rule includes: The session management network element determines the user plane security rule based on security indication information and a user plane security policy of the terminal. In other words, the session management network element may choose, based on a type of the indication information and a user plane security requirement of the terminal, to provide or not to provide the user plane security rule, to implement differentiated services and match requirements of terminals.

Optionally, that the session management network element determines the user plane security rule based on security indication information and a user plane security policy of the terminal includes: The session management network element determines the user plane security rule when the security indication information indicates to use the IPsec connection to protect the user plane data and the user plane security policy of the terminal is that user plane security protection is determined to be enabled, to provide the user plane security rule as needed. This avoids a waste of resources.

Optionally, the security indication information is end to end E2E security indication information.

Optionally, the method according to the first aspect may further include: The session management network element obtains the security indication information from a data management network element. For example, the security indication information may be carried in subscription information of the terminal. In this way, the session management network element may obtain the security indication information by reusing a procedure of obtaining the subscription information of the terminal, to improve communication efficiency. Alternatively, the security indication information is preconfigured in the session management network element, and the session management network element may obtain the security indication information from local storage. In this way, no interaction between network elements is needed, thereby avoiding signaling exchange overheads.

In a possible design solution, the user plane security rule includes identification information. The identification information identifies the user plane security rule, to avoid an IPsec connection establishment failure caused because the session management network element cannot identify the user plane security rule.

Optionally, the user plane security rule is carried in an N4 session establishment request message, and the identification information includes at least one of the following: an N4 session identifier or a user plane security rule identifier. The N4 session identifier may identify that the user plane security rule is a user plane security rule of an N4 session, so that the first user plan network element can configure the user plane security rule. Certainly, the rule identifier may alternatively not include the N4 session identifier. In this case, an information element hierarchical relationship between the user plane security rule identifier and the N4 session identifier that are in the N4 session establishment request message may implicitly indicate that the user plane security rule is the user plane security rule of the N4 session, to reduce communication overheads and improve the communication efficiency.

Optionally, the user plane security rule includes at least one of the following: a security protocol, encryption indication information, or integrity protection indication information, the security protocol indicates a security protocol used by the IPsec connection, the encryption indication information indicates whether encryption is performed for the IPsec connection, and the integrity protection indication information indicates whether integrity protection is performed for the IPsec connection. For example, the security protocol includes at least one of the following: an encapsulating security payload ESP protocol or an authentication header AH protocol.

It may be learned that the security protocol, the encryption indication information, and the integrity protection indication information may have a same indication function. For example, when the encryption indication information indicates that the encryption is performed for the IPsec connection, and the integrity protection indication information indicates that the integrity protection is performed for the IPsec connection, functions of the two pieces of indication information are equivalent to that of indicating the security protocol as the ESP protocol, or the ESP protocol and the AH protocol. For another example, when the encryption indication information indicates that the encryption is not performed for the IPsec connection, and the integrity protection indication information indicates that the integrity protection is performed for the IPsec connection, functions of the two pieces of indication information are equivalent to that of indicating the security protocol as the AH protocol. Therefore, the security protocol, the encryption indication information, and the integrity protection indication information may be selectively carried in the user plane security rule, to reduce communication overheads and improve communication efficiency.

Optionally, the user plane security rule includes an encapsulation mode. The encapsulation mode indicates an encapsulation mode of a data packet on the IPsec connection. For example, the encapsulation mode includes any one of the following: a tunnel mode or a transport mode. In this way, different encapsulation modes are configured for different transmission scenarios, to ensure communication security in various transmission scenarios. For example, for a point-to-point transmission scenario, the transport mode may be configured. Alternatively, for a cross-network or cross-domain communication transmission scenario, the tunnel mode may be configured.

In a possible design solution, the method according to the first aspect may further include: The session management network element sends a network function NF discovery request message to a network function network element, and receives an NF discovery response message from the network function network element. The NF discovery request message indicates the network function network element to provide a candidate user plane network element, and the candidate user plane network element supports establishment of an IPsec connection to the terminal. The NF discovery response message includes identification information of the candidate user plane network element. In this way, the session management network element determines the first user plane network element from the candidate user plane network element.

It may be learned that, in this scenario, the network function network element provides the candidate user plane network element that supports the establishment of the IPsec connection to the terminal, so that the session management network element does not need to determine again whether the candidate user plane network element supports the establishment of the IPsec connection to the terminal, to save resources of the session management network element and improve running efficiency.

In a possible design solution, the method according to the first aspect may further include: The session management network element sends an NF discovery request message to a network function network element, and receives an NF discovery response message from the network function network element. The NF discovery request message indicates the network function network element to provide a candidate user plane network element. The NF discovery response message includes identification information of the candidate user plane network element and information indicating whether the candidate user plane network element supports establishment of an IPsec connection to the terminal. In this way, the session management network element determines the first user plane network element from the candidate user plane network element.

It may be learned that, in this scenario, the network function network element needs to provide only related information about the candidate user plane network element, and does not need to determine whether the candidate user plane network element supports the establishment of the IPsec connection to the terminal, to save resources of the network function network element and improve running efficiency.

In a possible design solution, the method according to the first aspect may further include: The session management network element determines the first user plane network element from a locally stored user plane network element that supports establishment of an IPsec connection to the terminal. In this way, no interaction between the network elements is needed, thereby avoiding the signaling exchange overheads.

In a possible design solution, the method according to the first aspect may further include: The session management network element obtains IPsec connection endpoint information from the data management network element. The IPsec connection endpoint information indicates the first user plane network element on the IPsec connection. In this way, the session management network element may choose, based on the IPsec connection endpoint information, to reuse the first user plane network element to establish an IPsec connection or reuse the existing IPsec connection of the first user plane network element. This reduces complexity and implementation difficulty.

In a possible design solution, the method according to the first aspect may further include: The session management network element sends IPsec connection endpoint information to the data management network element. The IPsec connection endpoint information indicates the first user plane network element on the IPsec connection, so that the first user plane network element may be reused subsequently to establish the IPsec connection. This reduces complexity and implementation difficulty.

In a possible design solution, the method according to the first aspect may further include: The session management network element sends security endpoint information to the terminal, where the security endpoint information indicates that a security endpoint is the first user plane network element. This avoids an IPsec connection failure caused because the terminal does not know that the IPsec connection needs to be established to the first user plane network element.

In a possible design solution, the method according to the first aspect may further include: The session management network element receives security capability information of the terminal from a mobility management network element. The security capability information indicates that the terminal supports establishment of an IPsec connection to a core network function. In this way, the session management network element may establish an IPsec connection only for the terminal that supports the establishment of the IPsec connection to the core network function, to avoid the waste of the resources.

According to a second aspect, a communication method is provided. The communication method includes: A first user plane network element receives a user plane security rule from a session management network element, and establishes an IPsec connection between the first user plane network element and a terminal according to the user plane security rule.

In a possible design solution, an access network device on the IPsec connection does not enable user plane security protection of the terminal.

In a possible design solution, that the first user plane network element establishes an IPsec connection between the first user plane network element and a terminal according to the user plane security rule includes: The first user plane network element sends a security association SA establishment request message to the terminal according to the user plane security rule, and receives a SA establishment response message from the terminal. The SA establishment request message may include a SA parameter of the first user plane network element, and the SA establishment response message may include a SA parameter of the terminal. In other words, the first user plane network element and the terminal may exchange respective SA parameters, to implement SA parameter alignment, and ensure that the IPsec connection is successfully established.

In a possible design solution, the user plane security rule includes identification information. The identification information identifies the user plane security rule.

Optionally, the user plane security rule is carried in an N4 session establishment request message. The identification information includes at least one of the following: an N4 session identifier or a user plane security rule identifier.

Optionally, the user plane security rule includes at least one of the following: a security protocol, encryption indication information, or integrity protection indication information. The security protocol indicates a security protocol used by the IPsec connection, the encryption indication information indicates whether encryption is performed for the IPsec connection, and the integrity protection indication information indicates whether integrity protection is performed for the IPsec connection.

Further, the security protocol includes at least one of the following: an ESP protocol or an AH protocol.

Optionally, the user plane security rule includes an encapsulation mode. The encapsulation mode indicates an encapsulation mode of a data packet on the IPsec connection.

Further, the encapsulation mode includes any one of the following: a tunnel mode or a transport mode.

In addition, for technical effects of the communication method according to the second aspect, refer to the technical effects of the communication method according to the first aspect. Details are not described herein again.

According to a third aspect, a communication method is provided. The communication method includes: A terminal receives security endpoint information from a session management network element, to establish an IPsec connection between the terminal and a security endpoint indicated by the security endpoint information. The security endpoint is a first user plane network element.

In a possible design solution, that the terminal establishes an IPsec connection to a security endpoint indicated by the security endpoint information includes: The terminal sends a SA establishment request message to the security endpoint, and receives a SA establishment response message from the security endpoint. The SA establishment request message includes a SA parameter of the terminal, and the SA establishment response message includes a SA parameter of the first user plane network element.

In a possible design solution, the method according to the third aspect may further include: The terminal sends security capability information of the terminal to a mobility management network element. The security capability information of the terminal indicates that the terminal supports establishment of an IPsec connection to a core network function.

In addition, for technical effects of the communication method according to the third aspect, refer to the technical effects of the communication method according to the first aspect. Details are not described herein again.

According to a fourth aspect, a communication method is provided. The communication method includes: A session management network element determines a user plane security rule, and sends the user plane security rule to a security network element. The user plane security rule is used to establish an IPsec connection between the security network element and a terminal.

It may be learned from the method according to the fourth aspect that, after the IPsec connection is established between the security network element and the terminal, the terminal or the security network element may be used as an endpoint device on the IPsec connection. In this case, when transmission of user plane data protected by IPsec is performed between endpoint devices, an intermediate transmission device (for example, an access network device) located between the endpoint devices, that is, an access network device on the IPsec connection, may directly perform transparent transmission of the user plane data. This reduces a risk of user plane data exposure.

In a possible design solution, the access network device on the IPsec connection does not enable user plane security protection of the terminal.

In a possible design solution, the user plane security rule includes identification information. The identification information identifies the user plane security rule.

Optionally, the user plane security rule is carried in an N4 session establishment request message, and the identification information includes at least one of the following: an N4 session identifier or a user plane security rule identifier.

Optionally, the user plane security rule includes at least one of the following: a security protocol, encryption indication information, or integrity protection indication information. The security protocol indicates a security protocol used by the IPsec connection, the encryption indication information indicates whether encryption is performed for the IPsec connection, and the integrity protection indication information indicates whether integrity protection is performed for the IPsec connection.

Further, the security protocol includes at least one of the following: an encapsulating security payload ESP protocol or an authentication header AH protocol.

Optionally, the user plane security rule includes an encapsulation mode. The encapsulation mode indicates an encapsulation mode of a data packet on the IPsec connection.

Further, the encapsulation mode includes any one of the following: a tunnel mode or a transport mode.

In a possible design solution, the method according to the fourth aspect may further include: The session management network element sends first information to a user plane network element, where the first information indicates at least one of the following: that the user plane network element sends data from the terminal or a data network to the security network element, or that the user plane network element sends data from the security network element to the terminal or a data network, to ensure that the user plane data can be normally exchanged between the security network element and the terminal.

In a possible design solution, the method according to the fourth aspect may further include: The session management network element receives security capability information of the terminal from a mobility management network element. The security capability information indicates that the terminal supports establishment of an IPsec connection to a core network function.

In addition, for technical effects of the communication method according to the fourth aspect, refer to the technical effects of the communication method according to the first aspect. Details are not described herein again.

According to a fifth aspect, a communication method is provided. The communication method includes: A security network element receives a user plane security rule sent by a session management network element, to establish an IPsec connection between the security network element and a terminal according to the user plane security rule.

In a possible design solution, an access network device on the IPsec connection does not enable user plane security protection of the terminal.

In a possible design solution, the user plane security rule includes identification information. The identification information identifies the user plane security rule.

Optionally, the user plane security rule is carried in an N4 session establishment request message, and the identification information includes at least one of the following: an N4 session identifier or a user plane security rule identifier.

Optionally, the user plane security rule includes at least one of the following: a security protocol, encryption indication information, or integrity protection indication information. The security protocol indicates a security protocol used by the IPsec connection, the encryption indication information indicates whether encryption is performed for the IPsec connection, and the integrity protection indication information indicates whether integrity protection is performed for the IPsec connection.

Further, the security protocol includes at least one of the following: an encapsulating security payload ESP protocol or an authentication header AH protocol.

Optionally, the user plane security rule includes an encapsulation mode. The encapsulation mode indicates an encapsulation mode of a data packet on the IPsec connection.

Further, the encapsulation mode includes any one of the following: a tunnel mode or a transport mode.

In a possible design solution, that the security network element establishes an IPsec connection between the security network element, a user plane network element, and the terminal according to the user plane security rule includes: The security network element sends a security association SA establishment request message to the terminal according to the user plane security rule via the user plane network element, and receives a SA establishment response message from the terminal via the user plane network element. The SA establishment request message includes a SA parameter of the security network element, and the SA establishment response message includes a SA parameter of the terminal.

According to a sixth aspect, a communication apparatus is provided. The communication apparatus includes a module configured to perform the method according to the first aspect, for example, a processing module and a transceiver module.

The processing module is configured to determine a user plane security rule. The transceiver module is configured to send the user plane security rule to a first user plane network element. The user plane security rule is used to establish an internet protocol security IPsec connection between the first user plane network element and a terminal.

The IPsec connection may be a secure connection established according to an IPsec protocol, in other words, an IPsec child security association SA established between the first user plane network element and the terminal.

In a possible design solution, an access network device on the IPsec connection does not enable user plane security protection of the terminal.

In a possible design solution, the processing module is further configured to determine the user plane security rule based on a radio access technology type of the terminal.

Optionally, the processing module is further configured to determine the user plane security rule when the radio access technology type is a satellite access type.

In a possible design solution, the processing module is further configured to determine the user plane security rule based on a radio access technology type of the terminal and a user plane security policy of the terminal.

Optionally, the processing module is further configured to determine the user plane security rule when the radio access technology type is a satellite access type and the user plane security policy of the terminal is that the user plane security protection is determined to be enabled.

In a possible design solution, the processing module is further configured to determine the user plane security rule based on security indication information. The security indication information indicates to use the IPsec connection to protect user plane data.

In a possible design solution, the processing module is further configured to determine the user plane security rule based on security indication information and a user plane security policy of the terminal.

Optionally, the processing module is further configured to determine the user plane security rule when the security indication information indicates to use the IPsec connection to protect user plane data and the user plane security policy of the terminal is that user plane security protection is determined to be enabled.

Optionally, the security indication information is end to end E2E security indication information.

Optionally, the transceiver module is further configured to obtain the security indication information from a data management network element. For example, the security indication information may be carried in subscription information of the terminal.

In a possible design solution, the user plane security rule includes identification information. The identification information identifies the user plane security rule.

Optionally, the user plane security rule is carried in an N4 session establishment request message, and the identification information includes at least one of the following: an N4 session identifier or a user plane security rule identifier. The N4 session identifier may identify that the user plane security rule is a user plane security rule of an N4 session.

Optionally, the user plane security rule includes at least one of the following: a security protocol, encryption indication information, or integrity protection indication information, the security protocol indicates a security protocol used by the IPsec connection, the encryption indication information indicates whether encryption is performed for the IPsec connection, and the integrity protection indication information indicates whether integrity protection is performed for the IPsec connection. For example, the security protocol includes at least one of the following: an encapsulating security payload ESP protocol or an authentication header AH protocol.

Optionally, the user plane security rule includes an encapsulation mode. The encapsulation mode indicates an encapsulation mode of a data packet on the IPsec connection. For example, the encapsulation mode includes any one of the following: a tunnel mode or a transport mode.

In a possible design solution, the transceiver module is further configured to: send a network function NF discovery request message to a network function network element, and receive an NF discovery response message from the network function network element. The NF discovery request message indicates the network function network element to provide a candidate user plane network element, and the candidate user plane network element supports establishment of an IPsec connection to the terminal. The NF discovery response message includes identification information of the candidate user plane network element. In this way, the processing module is further configured to determine the first user plane network element from the candidate user plane network element.

In a possible design solution, the transceiver module is further configured to: send an NF discovery request message to a network function network element, and receive an NF discovery response message from the network function network element. The NF discovery request message indicates the network function network element to provide a candidate user plane network element. The NF discovery response message includes identification information of the candidate user plane network element and information indicating whether the candidate user plane network element supports establishment of an IPsec connection to the terminal. In this way, the processing module is further configured to determine the first user plane network element from the candidate user plane network element.

In a possible design solution, the processing module is further configured to determine the first user plane network element from a locally stored user plane network element that supports establishment of an IPsec connection to the terminal.

In a possible design solution, the transceiver module is further configured to obtain IPsec connection endpoint information from the data management network element. The IPsec connection endpoint information indicates that an endpoint device on the IPsec connection is the first user plane network element.

In a possible design solution, the transceiver module is further configured to send IPsec connection endpoint information to the data management network element. The IPsec connection endpoint information indicates that an endpoint device on the IPsec connection is the first user plane network element.

In a possible design solution, the transceiver module is further configured to send security endpoint information to the terminal, where the security endpoint information indicates that a security endpoint is the first user plane network element.

In a possible design solution, the transceiver module is further configured to receive security capability information of the terminal from a mobility management network element. The security capability information indicates that the terminal supports establishment of an IPsec connection to a core network function.

Optionally, the transceiver module may include a receiving module and a sending module. The receiving module is configured to implement a receiving function of the communication apparatus according to the sixth aspect. The sending module is configured to implement a sending function of the communication apparatus according to the sixth aspect.

Optionally, the communication apparatus according to the sixth aspect may further include a storage module, and the storage module stores a program or instructions. When the processing module executes the program or the instructions, the communication apparatus is enabled to perform the communication method according to the first aspect.

It should be noted that the communication apparatus according to the sixth aspect may be a network device, for example, a session management network element, may be a chip (system) or another part or component that may be disposed in a network device, or may be an apparatus including a network device. This is not limited in this application.

In addition, for technical effects of the communication apparatus according to the sixth aspect, refer to the technical effects of the communication method according to the first aspect. Details are not described herein again.

According to a seventh aspect, a communication apparatus is provided. The communication apparatus includes a module configured to perform the method according to the second aspect, for example, a processing module and a transceiver module.

The transceiver module is configured to receive a user plane security rule from a session management network element. The processing module is configured to establish an IPsec connection between the communication apparatus according to the seventh aspect and a terminal according to the user plane security rule.

In a possible design solution, an access network device on the IPsec connection does not enable user plane security protection of the terminal.

In a possible design solution, the processing module is configured to control, according to the user plane security rule, the transceiver module to send a security association SA establishment request message to the terminal, and receive a SA establishment response message from the terminal. The SA establishment request message may include a SA parameter of the communication apparatus according to the seventh aspect, and the SA establishment response message may include a SA parameter of the terminal.

In a possible design solution, the user plane security rule includes identification information. The identification information identifies the user plane security rule.

Optionally, the user plane security rule is carried in an N4 session establishment request message. The identification information includes at least one of the following: an N4 session identifier or a user plane security rule identifier.

Optionally, the user plane security rule includes at least one of the following: a security protocol, encryption indication information, or integrity protection indication information. The security protocol indicates a security protocol used by the IPsec connection, the encryption indication information indicates whether encryption is performed for the IPsec connection, and the integrity protection indication information indicates whether integrity protection is performed for the IPsec connection.

Further, the security protocol includes at least one of the following: an ESP protocol or an AH protocol.

Optionally, the user plane security rule includes an encapsulation mode. The encapsulation mode indicates an encapsulation mode of a data packet on the IPsec connection.

Further, the encapsulation mode includes any one of the following: a tunnel mode or a transport mode.

Optionally, the transceiver module may include a receiving module and a sending module. The receiving module is configured to implement a receiving function of the communication apparatus according to the seventh aspect. The sending module is configured to implement a sending function of the communication apparatus according to the seventh aspect.

Optionally, the communication apparatus according to the seventh aspect may further include a storage module, and the storage module stores a program or instructions. When the processing module executes the program or the instructions, the communication apparatus is enabled to perform the communication method according to the second aspect.

It should be noted that the communication apparatus according to the seventh aspect may be a network device, for example, a first user plane network element, may be a chip (system) or another part or component that may be disposed in a network device, or may be an apparatus including a network device. This is not limited in this application.

In addition, for technical effects of the communication apparatus according to the seventh aspect, refer to the technical effects of the communication method according to the second aspect. Details are not described herein again.

According to an eighth aspect, a communication apparatus is provided. The communication apparatus includes a module configured to perform the method according to the third aspect, for example, a processing module and a transceiver module.

The transceiver module is configured to receive security endpoint information from a session management network element. The processing module is configured to establish an IPsec connection between the communication apparatus according to the eighth aspect and a security endpoint indicated by the security endpoint information. The security endpoint is a first user plane network element.

In a possible design solution, the transceiver module is further configured to: send a SA establishment request message to the security endpoint, and receive a SA establishment response message from the security endpoint. The SA establishment request message includes a SA parameter of the communication apparatus according to the eighth aspect, and the SA establishment response message includes a SA parameter of the first user plane network element.

In a possible design solution, the transceiver module is further configured to send security capability information of the communication apparatus according to the eighth aspect to a mobility management network element. The security capability information indicates that the communication apparatus according to the eighth aspect supports establishment of an IPsec connection to a core network function.

Optionally, the transceiver module may include a receiving module and a sending module. The receiving module is configured to implement a receiving function of the communication apparatus according to the eighth aspect. The sending module is configured to implement a sending function of the communication apparatus according to the eighth aspect.

Optionally, the communication apparatus according to the eighth aspect may further include a storage module, and the storage module stores a program or instructions. When the processing module executes the program or the instructions, the communication apparatus is enabled to perform the communication method according to the third aspect.

It should be noted that the communication apparatus according to the eighth aspect may be a terminal, may be a chip (system) or another part or component that may be disposed in a terminal, or may be an apparatus including a terminal. This is not limited in this application.

In addition, for technical effects of the communication apparatus according to the eighth aspect, refer to the technical effects of the communication method according to the third aspect. Details are not described herein again.

According to a ninth aspect, a communication apparatus is provided. The communication apparatus includes a module configured to perform the method according to the fourth aspect, for example, a processing module and a transceiver module.

The processing module is configured to determine a user plane security rule. The transceiver module is configured to send the user plane security rule to a security network element. The user plane security rule is used to establish an IPsec connection between the security network element and a terminal.

In a possible design solution, an access network device on the IPsec connection does not enable user plane security protection of the terminal.

In a possible design solution, the user plane security rule includes identification information. The identification information identifies the user plane security rule.

Optionally, the user plane security rule is carried in an N4 session establishment request message, and the identification information includes at least one of the following: an N4 session identifier or a user plane security rule identifier.

Optionally, the user plane security rule includes at least one of the following: a security protocol, encryption indication information, or integrity protection indication information. The security protocol indicates a security protocol used by the IPsec connection, the encryption indication information indicates whether encryption is performed for the IPsec connection, and the integrity protection indication information indicates whether integrity protection is performed for the IPsec connection.

Further, the security protocol includes at least one of the following: an encapsulating security payload ESP protocol or an authentication header AH protocol.

Optionally, the user plane security rule includes an encapsulation mode. The encapsulation mode indicates an encapsulation mode of a data packet on the IPsec connection.

Further, the encapsulation mode includes any one of the following: a tunnel mode or a transport mode.

In a possible design solution, the transceiver module is further configured to send first information to a user plane network element, where the first information indicates at least one of the following: that the user plane network element sends data from the terminal or a data network to the security network element, or that the user plane network element sends data from the security network element to the terminal or a data network.

In a possible design solution, the transceiver module is further configured to receive security capability information of the terminal from a mobility management network element. The security capability information indicates that the terminal supports establishment of an IPsec connection to a core network function.

Optionally, the transceiver module may include a receiving module and a sending module. The receiving module is configured to implement a receiving function of the communication apparatus according to the ninth aspect. The sending module is configured to implement a sending function of the communication apparatus according to the ninth aspect.

Optionally, the communication apparatus according to the ninth aspect may further include a storage module, and the storage module stores a program or instructions. When the processing module executes the program or the instructions, the communication apparatus is enabled to perform the communication method according to the fourth aspect.

It should be noted that the communication apparatus according to the ninth aspect may be a network device, for example, a session management network element, may be a chip (system) or another part or component that may be disposed in a network device, or may be an apparatus including a network device. This is not limited in this application.

In addition, for technical effects of the communication apparatus according to the ninth aspect, refer to the technical effects of the communication method according to the fourth aspect. Details are not described herein again.

According to a tenth aspect, a communication apparatus is provided. The communication apparatus includes a module configured to perform the method according to the fifth aspect, for example, a processing module and a transceiver module.

The transceiver module is configured to receive a user plane security rule sent by a session management network element. The processing module is configured to establish an IPsec connection between the communication apparatus according to the tenth aspect and a terminal according to the user plane security rule.

In a possible design solution, an access network device on the IPsec connection does not enable user plane security protection of the terminal.

In a possible design solution, the user plane security rule includes identification information. The identification information identifies the user plane security rule.

Optionally, the user plane security rule is carried in an N4 session establishment request message, and the identification information includes at least one of the following: an N4 session identifier or a user plane security rule identifier.

Optionally, the user plane security rule includes at least one of the following: a security protocol, encryption indication information, or integrity protection indication information. The security protocol indicates a security protocol used by the IPsec connection, the encryption indication information indicates whether encryption is performed for the IPsec connection, and the integrity protection indication information indicates whether integrity protection is performed for the IPsec connection.

Further, the security protocol includes at least one of the following: an encapsulating security payload ESP protocol or an authentication header AH protocol.

Optionally, the user plane security rule includes an encapsulation mode. The encapsulation mode indicates an encapsulation mode of a data packet on the IPsec connection.

Further, the encapsulation mode includes any one of the following: a tunnel mode or a transport mode.

In a possible design solution, the processing module is further configured to control, according to the user plane security rule, the transceiver module to send a security association SA establishment request message to the terminal via a user plane network element, and receive a SA establishment response message from the terminal via the user plane network element. The SA establishment request message includes a SA parameter of the communication apparatus according to the tenth aspect, and the SA establishment response message includes a SA parameter of the terminal.

Optionally, the transceiver module may include a receiving module and a sending module. The receiving module is configured to implement a receiving function of the communication apparatus according to the tenth aspect. The sending module is configured to implement a sending function of the communication apparatus according to the tenth aspect.

Optionally, the communication apparatus according to the tenth aspect may further include a storage module, and the storage module stores a program or instructions. When the processing module executes the program or the instructions, the communication apparatus is enabled to perform the communication method according to the fifth aspect.

It should be noted that the communication apparatus according to the tenth aspect may be a network device, for example, a security network element, may be a chip (system) or another part or component that may be disposed in a network device, or may be an apparatus including a network device. This is not limited in this application.

In addition, for technical effects of the communication apparatus according to the tenth aspect, refer to the technical effects of the communication method according to the fifth aspect. Details are not described herein again.

According to an eleventh aspect, a communication apparatus is provided. The communication apparatus includes a processor, and the processor is configured to perform the communication method according to any one of the first aspect to the fifth aspect.

In a possible design solution, the communication apparatus according to the eleventh aspect may further include a transceiver. The transceiver may be a transceiver circuit or an interface circuit. The transceiver may be used by the apparatus to communicate with another communication apparatus.

In a possible design solution, the communication apparatus according to the eleventh aspect may further include a memory. The memory and the processor may be integrated together, or may be disposed separately. The memory may be configured to store a computer program and/or data related to the communication method according to the first aspect.

In this application, the communication apparatus according to the eleventh aspect may be a terminal or a network device, may be a chip (system) or another part or component that may be disposed in a terminal or a network device, or may be an apparatus including a terminal or a network device.

In addition, for technical effects of the communication apparatus according to the eleventh aspect, refer to the technical effects of the communication method according to any one of the first aspect to the fifth aspect. Details are not described herein again.

According to a twelfth aspect, a communication apparatus is provided. The communication apparatus includes a processor. The processor is coupled to a memory, and the processor is configured to execute a computer program stored in the memory, to enable the communication apparatus to perform the communication method according to any one of the first aspect to the fifth aspect.

In a possible design solution, the communication apparatus according to the twelfth aspect may further include a transceiver. The transceiver may be a transceiver circuit or an interface circuit. The transceiver may be used by the apparatus to communicate with another communication apparatus.

In this application, the communication apparatus according to the twelfth aspect may be a terminal or a network device, may be a chip (system) or another part or component that may be disposed in a terminal or a network device, or may be an apparatus including a terminal or a network device.

In addition, for technical effects of the communication apparatus according to the twelfth aspect, refer to the technical effects of the communication method according to any one of the first aspect to the fifth aspect. Details are not described herein again.

According to a thirteenth aspect, a communication apparatus is provided, including a processor and a memory. The memory is configured to store a computer program, and when the processor executes the computer program, to enable the communication apparatus to perform the communication method according to any one of the first aspect to the fifth aspect.

In a possible design solution, the communication apparatus according to the thirteenth aspect may further include a transceiver. The transceiver may be a transceiver circuit or an interface circuit. The transceiver may be used by the apparatus to communicate with another communication apparatus.

In this application, the communication apparatus according to the thirteenth aspect may be a terminal or a network device, may be a chip (system) or another part or component that may be disposed in a terminal or a network device, or may be an apparatus including a terminal or a network device.

In addition, for technical effects of the communication apparatus according to the thirteenth aspect, refer to the technical effects of the communication method according to any one of the first aspect to the fifth aspect. Details are not described herein again.

According to a fourteenth aspect, a communication apparatus is provided, including a processor. The processor is configured to: be coupled to a memory, and perform the communication method according to any one of the first aspect to the fifth aspect based on a computer program after reading the computer program in the memory.

In a possible design solution, the communication apparatus according to the fourteenth aspect may further include a transceiver. The transceiver may be a transceiver circuit or an interface circuit. The transceiver may be used by the apparatus to communicate with another communication apparatus.

In this application, the communication apparatus according to the fourteenth aspect may be a terminal or a network device, may be a chip (system) or another part or component that may be disposed in a terminal or a network device, or may be an apparatus including a terminal or a network device.

In addition, for technical effects of the communication apparatus according to the fourteenth aspect, refer to the technical effects of the communication method according to any one of the first aspect to the fifth aspect. Details are not described herein again.

According to a fifteenth aspect, a communication system is provided, including the apparatus according to any one of the first aspect to the fifth aspect.

According to a sixteenth aspect, a computer-readable storage medium is provided, including a computer program or instructions. When the computer program or the instructions are run on a computer, the computer is enabled to perform the communication method according to any one of the first aspect to the fifth aspect.

According to a seventeenth aspect, a computer program product is provided, including a computer program or instructions. When the computer program or the instructions are run on a computer, the computer is enabled to perform the communication method according to any one of the first aspect to the fifth aspect.

### BRIEF DESCRIPTION OF DRAWINGS

FIG. 1 is a diagram of an architecture of IPsec;
FIG. 2 is a diagram of an encapsulation structure of a transport mode;
FIG. 3 is a diagram of an encapsulation structure of a tunnel mode;
FIG. 4 is a flowchart of establishing an IKE SA and an IPsec child SA;
FIG. 5 is a schematic of an architecture of a 5G system;
FIG. 6 is a diagram of a user plane data stream in a 5G system;
FIG. 7 is a schematic flowchart of establishing a PDU session;
FIG. 8 is a schematic of an architecture of a communication system according to an embodiment of this application;
FIG. 9 is a diagram of a protocol stack of a communication system according to an embodiment of this application;
FIG. 10A and FIG. 10B are a first schematic flowchart of a communication method according to an embodiment of this application;
FIG. 11A and FIG. 11B are a second schematic flowchart of a communication method according to an embodiment of this application;
FIG. 12A and FIG. 12B are a third schematic flowchart of a communication method according to an embodiment of this application;
FIG. 13A and FIG. 13B are a fourth schematic flowchart of a communication method according to an embodiment of this application;
FIG. 14 is a fifth schematic flowchart of a communication method according to an embodiment of this application;
FIG. 15 is a first diagram of a structure of a communication apparatus according to an embodiment of this application; and
FIG. 16 is a second diagram of a structure of a communication apparatus according to an embodiment of this application.

### DESCRIPTION OF EMBODIMENTS

For ease of understanding, the following first describes technical terms in embodiments of this application.

### 1. Internet protocol security (internet protocol security, IPsec):

IPsec is a set of network security solutions applied to an internet protocol (internet protocol, IP) layer to implement security protection of the IP layer. For example, IPsec is used to protect an IP data packet. According to IPsec, both communication parties may implement functions such as data source authentication, integrity protection, confidentiality protection, and replay protection at the IP layer. The data source authentication is mainly used to authenticate an identity of a transmit end to ensure that the identity is not repudiated. The integrity protection is mainly used to ensure that data is not tampered with in a transmission process. The confidentiality protection is mainly used to protect user data through encryption. The replay protection is mainly used to reject to receive an original or repeated packet.

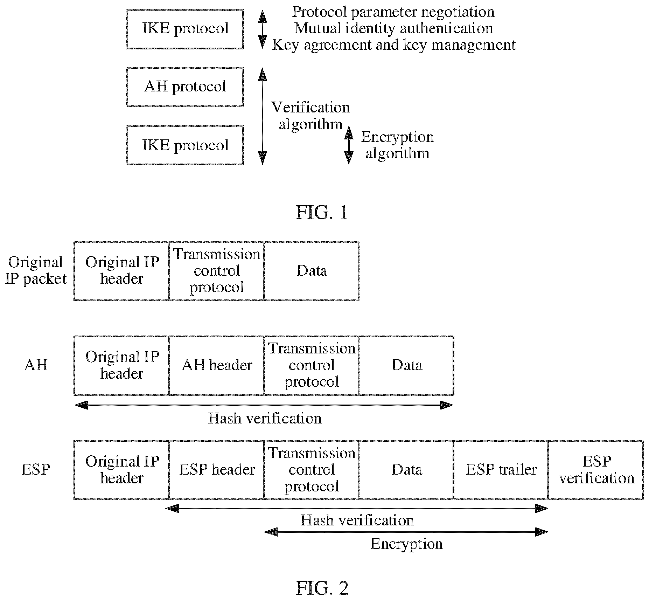

At a protocol layer, FIG. 1 is a diagram of an architecture of IPsec. As shown in FIG. 1, IPsec includes two security processing protocols, for example, an encapsulating security payload (encapsulating security payload, ESP) protocol and an authentication header (authentication header, AH) protocol, and one key exchange protocol, for example, an internet key exchange (internet key exchange, IKE) protocol. The ESP protocol mainly provides functions such as data source authentication, data integrity check, anti-replay attack, and data encryption. The AH protocol mainly provides functions such as data source authentication, data integrity check, and anti-replay attack, but does not support data encryption. The AH protocol and the ESP protocol may be used separately or nested. For example, both the communication parties (for example, two hosts, two security gateways (a firewall and a router), or a host and a security gateway) may use only the AH protocol, only the ESP protocol, or both the AH protocol and the ESP protocol. The IKE protocol is mainly responsible for key management, to define methods for authenticating an identity, negotiating an encryption algorithm, and generating a shared session key between both the communication parties. IKE may reserve a key agreement result in a security association (security association, SA) for communication between both the communication parties according to the AH protocol and/or the ESP protocol.

At a logical layer, the security association (security association, SA) is a basis of IPsec. The SA is an agreement (or a security service) established by both the communication parties through negotiation, and is a unidirectional logical connection created for a security purpose. Data streams passing through a same SA are provided with a same security service. The SA may include an internet key exchange protocol (internet key exchange protocol, IKE) SA and an IPsec SA. The IKE SA is used to protect messages of a negotiation procedure and an authentication procedure, for example, a negotiation procedure of parameters such as an IPsec protocol (AH or ESP), an encapsulation mode (a transport mode or a tunnel mode), a verification algorithm, an encryption algorithm, an encryption key, a key lifetime, or an anti-replay window. These parameters are also referred to as SA-associated parameters (SA context) and are stored in a security association database (security association database, SAD). The IPsec SA is used to protect actually transmitted data traffic. The IPsec SA is unidirectional protection. Both the IKE SA and the IPsec SA are generated through negotiating the IKE protocol.

The SA may be uniquely identified. For example, a security parameter index (security parameter index, SPI), IP destination addresses of both the communication parties, and a security protocol number constitute a triplet that is used to uniquely identify a SA, so that parameters associated with the SA can be obtained from the SAD based on the triplet. The SA may be determined by security policies (security policies, SPs) of both the communication parties. For example, whether to establish the SA and how to establish the SA between both the communication parties is determined. The SP may include an identifier of a protected data stream, a security proposal (for example, an encapsulation mode, a security protocol, and an encryption authentication algorithm), a key configuration manner, a local/peer IP address of a security tunnel, IKE matching, and the like. In addition, the SP may also determine a manner of processing a data packet, for example, performing IPsec on the data packet, not performing IPsec (bypass) on the data packet, or discarding the data packet based on a selector (selector) of the data packet. The selector may include information such as an IP address and a next-layer header of the data packet. The SP may be stored in a security policy database (security policy database, SPD). Both the communication parties may query for, from the SPD, an SP corresponding to the data packet, and then perform corresponding processing on the data packet according to the SP.

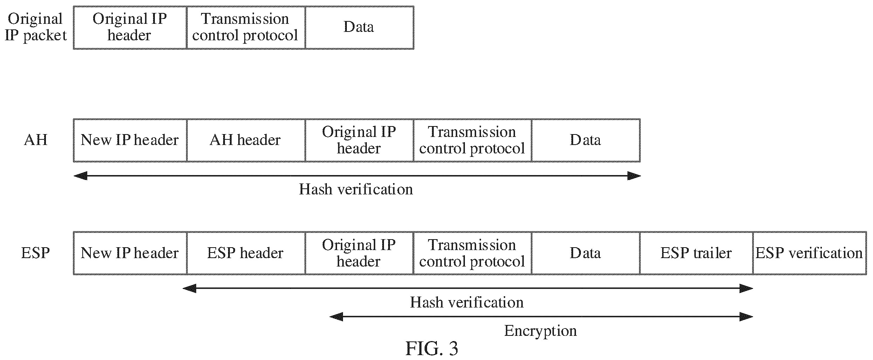

The IPsec protocol may provide two encapsulation modes: the transport mode and the tunnel mode. FIG. 2 is a diagram of an encapsulation structure of the transport mode. As shown in FIG. 2, in the transport mode, an AH header or an ESP header is inserted behind an original IP header and in front of another transport layer protocol. A data packet does not generate a new IP header. The transport mode is usually used in a point-to-point (data transmission point) scenario, for example, an IPsec scenario between hosts. In this case, the data transmission point is an encryption point/decryption point. FIG. 3 is a diagram of an encapsulation structure of the tunnel mode. As shown in FIG. 3, in the tunnel mode, an AH header or an ESP header is inserted in front of an original IP header. A new IP header needs to be generated again for a data packet and is inserted in front of the AH header or the ESP header to facilitate forwarding. It may be learned that the tunnel mode may be used for cross-network or cross-domain communication, for example, an IPsec scenario in which private networks communicate with each other over a public network. In addition, for a data packet inserted with an ESP header, an ESP trailer and ESP verification are further inserted into a trailer of the data packet. The ESP trailer is usually used for padding to ensure that lengths of data packets are the same. The ESP verification is mainly used for ESP hash (hash) verification.

### 2. IPsec establishment procedure:

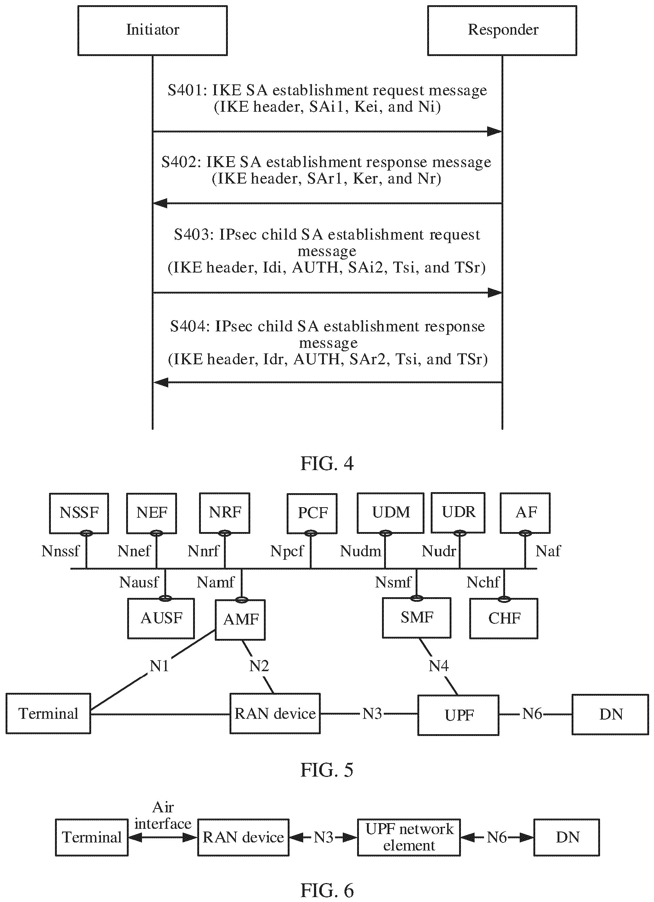

The IPsec establishment procedure mainly includes an establishment procedure of an IKE SA and an IPsec child SA. Both communication parties (an initiator (initiator) and a responder (responder)) first establish the IKE SA, and then establish the IPsec child SA based on the IKE SA, to improve communication security. FIG. 4 is a flowchart of establishing the IKE SA and the IPsec child SA. As shown in FIG. 4, the procedure includes the following steps.

S401: The initiator sends an IKE SA establishment request message to the responder. Correspondingly, the responder receives the IKE SA establishment request message from the initiator.

The IKE SA establishment request message may be used to request to establish the IKE SA. The IKE SA establishment request message may include an IKE header (IKE header, HDR). The IKE header includes an IKE SA parameter related to the initiator, for example, an SPI, an IKE protocol number, the encapsulation mode (the transport mode or the tunnel mode), and a message identity (message identity, message ID), and identifies the IKE SA establishment request message. In addition, the IKE SA establishment request message may further include a first algorithm identifier (for example, SAi1), a first encryption material (for example, KEi), and a first random number (for example, Ni). The first algorithm identifier mainly indicates an encryption algorithm supported by the initiator. The first encryption material includes a Diffie-Hellman value of the initiator, and is mainly used for encryption of the initiator. The first random number is mainly used by the initiator to generate a key, perform encryption, and the like.

S402: The responder sends an IKE SA establishment response message to the initiator. Correspondingly, the initiator receives the IKE SA establishment response message from the responder.

The IKE SA establishment response message may be used to notify the initiator that the IKE SA may be established. The IKE SA establishment response message may include an IKE header. Similar to the IKE header in the IKE SA establishment request message, the IKE header in the IKE SA establishment response message may include an IKE SA parameter related to the responder. In addition, the IKE SA establishment response message may further include a second algorithm identifier (for example, SAr1), a second encryption material (for example, Ker), and a second random number (for example, Nr). The second algorithm identifier mainly indicates an encryption algorithm supported by the responder. The second encryption material includes a Diffie-Hellman value of the responder, and is mainly used for encryption of the responder. The second random number is mainly used by the responder to generate a key, perform encryption, and the like.

After S401 and S402, both the communication parties have obtained related parameters of each other, and may establish the IKE SA based on a same parameter. In this way, both the communication parties may generate a key seed (key seed) based on the IKE SA to generate all subsequent keys.

S403: The initiator sends an IPsec child SA establishment request message to the responder. Correspondingly, the responder receives the IPsec child SA establishment request message from the initiator.

The IPsec child SA establishment request message may be a message encrypted based on the IKE SA, and may be used to request to establish the IPsec child SA. The IPsec child SA establishment request message may include an IKE header. The IKE header includes an IPsec child SA parameter related to the initiator, for example, an SPI, an IKE protocol number, an encapsulation mode, and a message identifier. In addition, the IPsec child SA establishment request message may further include a first identification-initiator (Identification-Initiator, Idi), first authentication (authentication, AUTH) information, a third algorithm identifier (for example, SAi2), and a first data packet filtering rule of the IPsec child SA. The first identification-initiator may indicate an identity of the initiator, the first authentication information is used for identity authentication, and the third algorithm identifier mainly indicates an encryption algorithm supported by the initiator. The first data packet filtering rule may include an IP address or an IP address segment (for example, TSi and TSr). TSi or TSr is an IP address or an IP address segment corresponding to a data packet that needs to be encrypted and that is sent by the initiator, and indicates that if a source address of the data packet sent by the initiator to the responder is within a range of TSi or TSr, the child SA needs to be used for encryption. Alternatively, TSi or TSr is an IP address or an IP address segment corresponding to a data packet that needs to be decrypted and that is received by the initiator, and indicates that if a destination address of the data packet that is received by the initiator and that is from the responder is within a range of TSi or TSr, the child SA needs to be used for decryption.

S404: The responder sends an IPsec child SA establishment response message to the initiator. Correspondingly, the initiator receives the IPsec child SA establishment response message from the responder.

The IPsec child SA establishment response message may be used to notify the initiator that the IPsec child SA may be established. The IPsec child SA establishment response message may include an IKE header. Similar to the IKE header in the IPsec child SA establishment request message, the IKE header in the IPsec child SA establishment response message may include an IPsec child SA parameter related to the responder. In addition, the IPsec child SA establishment response message may further include a second identification-initiator (Idr), second authentication information, a fourth algorithm identifier (for example, SAr2), and a second data packet filtering rule of the IPsec child SA. The second identification-initiator may indicate an identity of the responder. The second authentication information is used for identity authentication. The fourth algorithm identifier mainly indicates an encryption algorithm supported by the responder. The second data packet filtering rule may include an IP address or an IP address segment (for example, TSi and TSr). TSi or TSr is the IP address or the IP address segment corresponding to the data packet that needs to be decrypted and that is received by the responder, and indicates that if the destination address of the data packet that is received by the responder and that is from the initiator is within the range of TSi or TSr, the child SA needs to be used for decryption. Alternatively, TSi or TSr is the IP address or the IP address segment corresponding to the data packet that needs to be encrypted and that is sent by the responder, and indicates that if the source address of the data packet sent by the responder to the initiator is within the range of TSi or TSr, the child SA needs to be used for encryption.

After S403 and S404, both the communication parties have obtained related parameters of each other, to establish the IPsec child SA based on a same parameter. In this way, both the communication parties may securely protect data transmission based on the IPsec child SA. It should be noted that S403 and S404 may occur for a plurality of times, and the IKE SA is used for security protection, to establish a plurality of groups of IPsec child SAs for data transmission. In addition, an initiator for establishing the child SA may be an initiator of the IKE SA, that is, the foregoing sender, or may be a responder of the IKE SA, that is, the foregoing responder. This is not specifically limited in this application.

### 3. 5th generation (5th generation, 5G) mobile communication system:

FIG. 5 is a schematic of an architecture of the 5G system. As shown in FIG. 5, the 5G system includes an access network (access network, AN) and a core network (core network, CN), and may further include a terminal.

The terminal may be a terminal having receiving and sending functions, or may be a chip or a chip system that may be disposed in the terminal. The terminal may also be referred to as user equipment (user equipment, UE), an access terminal, a subscriber unit (subscriber unit), a subscriber station, a mobile station (mobile station, MS), a remote station, a remote terminal, a mobile device, a user terminal, a terminal, a wireless communication device, a user agent, or a user apparatus. The terminal in embodiments of this application may be a mobile phone (mobile phone), a cellular phone (cellular phone), a smartphone (smartphone), a tablet computer (Pad), a wireless data card, a personal digital assistant (personal digital assistant, PDA), a wireless modem (modem), a handheld device (handset), a laptop computer (laptop computer), a machine type communication (machine type communication, MTC) terminal, a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a road side unit (road side unit, RSU) having a terminal function, or the like. Alternatively, the terminal in this application may be an in-vehicle module, an in-vehicle subassembly, an in-vehicle component, an in-vehicle chip, or an in-vehicle unit that is built in a vehicle as one or more components or units.

The foregoing AN is used to implement an access-related function, may provide a network access function for an authorized user in a specific area, and can determine transmission links with different quality based on a user level, a service requirement, and the like, to perform transmission of user data. The AN forwards a control signal and user data between the terminal and the CN. The AN may include an access network device, or may be referred to as a radio access network (radio access network, RAN) device.

The RAN device may be a device that provides access for the terminal. For example, the RAN device may include a next-generation mobile communication system, for example, a 6G access network device such as a 6G base station. Alternatively, in the next-generation mobile communication system, the network device may alternatively be named in another manner, which falls within the protection scope of embodiments of this application. This is not limited in this application. Alternatively, the RAN device may include a gNB in the 5G system, for example, a new radio (new radio, NR) system, or one or a group (including a plurality of antenna panels) of antenna panels of a base station in 5G, or may be a network node that forms a gNB, a transmission point (transmission and reception point, TRP, or transmission point, TP), or a transmission measurement function (transmission measurement function, TMF), for example, a baseband unit (baseband unit, BBU), a central unit (central unit, CU) or a distributed unit (distributed unit, DU), an RSU having a base station function, a wired access gateway, or a 5G core network element. Alternatively, the RAN device may include an access point (access point, AP) in a wireless fidelity (wireless fidelity, Wi-Fi) system, a wireless relay node, a wireless backhaul node, macro base stations in various forms, a micro base station (also referred to as a small cell), a relay station, an access point, a wearable device, a vehicle-mounted device, or the like.

The CN is mainly responsible for maintaining subscription data of a mobile network, and provides functions such as session management, mobility management, policy management, and security authentication for the terminal. The CN mainly includes the following network elements: a user plane function (user plane function, UPF) network element, an authentication server function (authentication server function, AUSF) network element, an access and mobility management function (access and mobility management function, AMF) network element, a session management function (session management function, SMF) network element, a network slice selection function (network slice selection function, NSSF) network element, a network exposure function (network exposure function, NEF) network element, a network function repository function (NF repository function, NRF) network element, a policy control function (policy control function, PCF) network element, a unified data management (unified data management, UDM) network element, a unified data repository (unified data repository, UDR), an application function (application function, AF) network element, and a charging function (charging function, CHF) network element.

The UPF network element is mainly responsible for user data processing (forwarding, receiving, charging, and the like). For example, the UPF network element may receive user data from a data network (data network, DN), and forward the user data to the terminal via the access network device. The UPF network element may also receive the user data from the terminal via the access network device, and forward the user data to the DN. The DN network element is an operator network that provides a data transmission service for a user, for example, an internet protocol (internet protocol, IP), a multi-media service (IP multi-media service, IMS), and an internet (internet). The DN may be an external network of an operator, or may be a network controlled by an operator, and is configured to provide a service for the terminal device.

The AUSF network element is mainly configured to perform security authentication on the terminal.

The AMF network element is mainly used for mobility management in the mobile network, such as user location update, registration of a user to a network, and user handover.

The SMF network element is mainly used for session management in the mobile network, for example, session establishment, modification, and release. A specific function is, for example, allocating an internet protocol (internet protocol, IP) address to the user, or selecting a UPF that provides a packet forwarding function.

The PCF network element mainly supports providing a unified policy framework to control network behavior, and providing a policy rule for a control layer network function, and is responsible for obtaining policy-related subscription information of the user. The PCF network element may provide a policy such as a quality of service (Quality of Service, QoS) policy or a slice selection policy to the AMF network element and the SMF network element.

The NSSF network element is mainly configured to select a network slice for the terminal.

The NEF network element is mainly configured for capability supporting and event exposure.

The UDM network element is mainly configured to store user data, for example, subscription data and authentication/authorization data.

The UDR network element is mainly configured to store structured data. Stored content includes subscription data, policy data, externally exposed structured data, and application-related data.

The AF network element mainly supports interaction with the CN to provide a service, for example, affecting a data routing decision-making and a policy control function, or providing some third-party services for a network side.

### 4. Security protection in the 5G system:

FIG. 6 is a diagram of a user plane data stream in the 5G system. As shown in FIG. 6, user plane data of the UE may be sequentially sent to a data network (data network, DN) via a RAN device and a UPF network element. Alternatively, user plane data of a DN may be sequentially sent to UE via a RAN device and a UPF network element. In this architecture, the 5G system may implement user plane security protection between the UE and the DN in a hop-by-hop protection manner. For example, an IPsec connection may be established (where for example, an IPsec child SA is established) between the RAN device and the UPF network element, to ensure communication security between the UPF network element and the RAN device. For a specific implementation principle, refer to related descriptions in "1. IPsec" and "2. IPsec establishment procedure". Details are not described again. A user plane secure connection may be established between the RAN device and the UE, to ensure communication security between the UE and the RAN device. Details are described below.

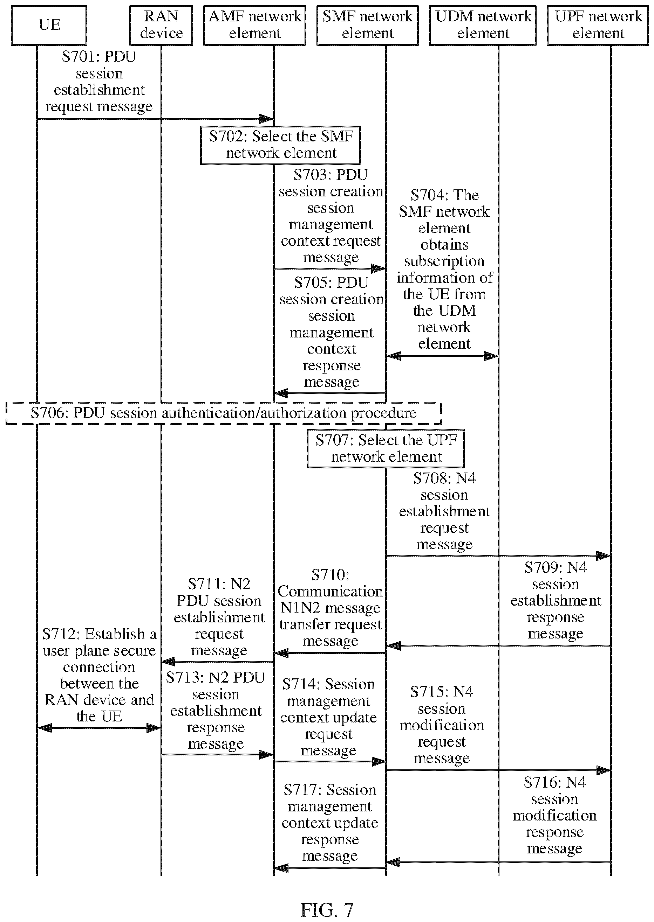

In the 5G system, the user plane secure connection between the UE and the RAN device may be established in a process of establishing a protocol data unit (protocol data unit, PDU) session. For example, FIG. 7 is a schematic flowchart of establishing a PDU session. As shown in FIG. 7, the procedure of establishing the PDU session includes the following steps.

S701: UE sends a PDU session establishment request (PDU session establishment request) message to an AMF network element via a RAN device. Correspondingly, the AMF network element receives the PDU session establishment request message from the UE via the RAN device.

The PDU session establishment request message is used to request to establish a corresponding PDU session. The PDU session establishment request message may include information such as a PDU session identity (identity, ID), a requested PDU session type (type), and a requested session and service continuity (session and service continuity, SSC) mode.

S702: The AMF network element selects an SMF network element.

The AMF network element may select an SMF network element that is suitable for establishing a current session, for example, an SMF network element with low load or an SMF network element that is close to the UE.

S703: The AMF network element sends a PDU session creation session management context request (Nsmf_PDUSession_CreateSMContext request) message to the SMF network element. Correspondingly, the SMF network element receives the PDU session creation session management context request message from the AMF network element.

The PDU session creation session management context request message is used to request to create the PDU session. The PDU session creation session management context request message may include the PDU session establishment request message, a radio access technology (radio access technology, RAT) type, a data network name, slice information, and the like. The RAT type indicates a type of a radio technology used by the UE to access a CN. For details, refer to the following embodiment. The data network name identifies a data network accessed by the UE. The slice information identifies a slice corresponding to the PDU session that is requested to be established.

S704: The SMF network element obtains subscription information of the UE from a UDM network element.

The subscription information of the UE includes a user plane security policy of the UE. The user plane security policy includes a user plane encryption protection policy and a user plane integrity protection policy. The user plane encryption protection policy includes enabling required ("required"), enabling preferred ("preferred"), and enabling not needed ("not needed"). Similarly, the user plane integrity protection policy also includes enabling required, enabling preferred, and enabling not needed.

For example, if the user plane encryption protection policy is enabling required, and the user plane integrity protection policy is enabling required, the RAN device enables user plane encryption protection and user plane integrity protection, performs the encryption protection and the integrity protection on user plane data between the RAN device and the UE by using a user plane encryption key, a user plane integrity protection key, and a user plane security algorithm, and performs decryption and verification.

For another example, if the user plane encryption protection policy is enabling required, and the user plane integrity protection policy is enabling not needed, the RAN device enables user plane encryption protection, does not enable user plane integrity protection, and performs the encryption protection or decryption on user plane data between the RAN device and the UE by using a user plane encryption key and a user plane security algorithm. For still another example, if the user plane encryption protection policy and/or the user plane integrity protection policy are/is enabling preferred, the RAN device may choose, based on a status (for example, a load size) of the RAN device, to enable or not to enable user plane encryption protection and/or user plane integrity protection.

Alternatively, the user plane security policy of the UE may be preconfigured in local configuration information of the SMF network element. The SMF network element may obtain the user plane security policy of the UE from the local configuration information.

S705: The SMF network element sends a PDU session creation session management context response (Nsmf_PDUSession_CreateSMContext response) message to the AMF network element. Correspondingly, the AMF network element receives the PDU session creation session management context response message from the SMF network element.

The PDU session creation session management context response message may indicate a PDU session creation result, for example, whether PDU session creation succeeds or fails. If the PDU session creation succeeds, the PDU session creation session management context response message may further include a session management (session management, SM) context identifier. The SM context identifier is used to mark a context of the PDU session. Optionally, the PDU session creation session management context response message may further include a PDU session identifier, a slice identifier, and the like. The PDU session identifier may identify the PDU session. The slice identifier may identify a slice corresponding to the PDU session.

S706: The SMF network element performs a PDU session authentication/authorization procedure.

S706 is an optional step. If the subscription information of the UE indicates that authentication/authorization needs to be performed on the PDU session, the SMF network element performs S706. If the subscription information of the UE indicates that authentication/authorization does not need to be performed on the PDU session, the SMF network element does not perform S706. If the authentication/authorization on the PDU session succeeds, the SMF network element continues to perform a subsequent procedure of PDU session establishment, for example, perform S707. If the authentication/authorization on the PDU session fails, the SMF network element rejects to perform a subsequent procedure of PDU session establishment.

S707: The SMF network element selects a UPF network element.

The SMF network element may select, through interaction with an NRF network element, a UPF network element suitable for the current session. For example, the UPF network element may meet the following conditions: The UPF network element can serve a data network corresponding to the PDU session, can serve a slice corresponding to the PDU session, has low load, or the like.

S708: The SMF network element sends an N4 session establishment request (N4 session establishment request) message to the UPF network element. Correspondingly, the UPF network element receives the N4 session establishment request message from the SMF network element.

The N4 session establishment request message may be used by the UPF network element to configure an N4 session. For example, the N4 session establishment request message may include an N4 session identifier, a packet detection rule, a QoS execution rule, and the like. The N4 session identifier may identify the N4 session. The packet detection rule may be used by the UPF network element to filter a data packet. The QoS execution rule may be used by the UPF network element to perform QoS control on the data packet.

S709: The UPF network element sends an N4 session establishment response (N4 session establishment response) message to the SMF network element. Correspondingly, the SMF network element receives the N4 session establishment response message from the UPF network element.

The N4 session establishment response message is used to respond to the N4 session establishment request message. The N4 session establishment response message may include CN tunnel information of the N4 session, where the CN tunnel information of the N4 session is used by the RAN device to send a data packet to the UPF network element.

S710: The SMF network element sends a communication N1N2 message transfer request (Namf_communication_N1N2messageTransfer request) message to the AMF network element. Correspondingly, the AMF network element receives the communication N1N2 message transfer request message from the SMF network element.

The communication N1N2 message transfer request message may include a PDU session identifier, N2 SM information, and an N1 SM container. The N2 SM information may include the PDU session identifier, a user plane security policy used by the RAN device to configure user plane security, CN tunnel information used to send a data packet to the UPF, and the like. The N1 SM container may include a selected PDU session type, a data network name, and the like.

S711: The AMF network element sends an N2 PDU session request (N2 PDU session request) message to the RAN device. Correspondingly, the RAN device receives the N2 PDU session request message from the AMF network element.

The N2 PDU session request message may include N2 SM information and a non-access stratum (non-access stratum, NAS) message. The NAS message may include the PDU session identifier and the N1 SM container.

S712: Establish a user plane secure connection between the RAN device and the UE.

Establishment of the user plane secure connection may be implemented by activating user plane security protection. The user plane security protection may include user plane encryption protection and/or user plane integrity protection.

Specifically, the RAN device may activate the user plane security protection according to the received user plane security policy, and indicate, to the UE via a radio resource control (radio resource control, RRC) reconfiguration procedure, whether to enable the user plane security protection. For example, the RAN device may send an RRC connection reconfiguration (RRC connection reconfiguration) message to the UE, where the RRC connection reconfiguration message may include user plane activation indication information. The user plane activation indication information may be information determined by the RAN device according to the user plane security policy of the UE. The user plane activation indication information may include user plane encryption protection activation indication information and/or user plane integrity protection activation indication information. The user plane encryption protection activation indication information indicates whether to enable the user plane encryption protection, and the user plane integrity protection activation indication information indicates whether to enable the user plane integrity protection. If the user plane integrity protection activation indication information included in the user plane activation indication information indicates enabling ("enable"), and the user plane activation indication information does not include the user plane encryption protection activation indication information, the UE may determine to enable the user plane encryption protection and the user plane integrity protection. If the user plane encryption protection activation indication information included in the user plane activation indication information indicates disabling ("disable"), and the user plane activation indication information does not include the user plane integrity protection activation indication information, the UE may determine not to enable the user plane encryption protection and the user plane integrity protection. If the user plane integrity protection activation indication information included in the user plane activation indication information indicates enabling, and the user plane encryption protection activation indication information included in the user plane activation indication information indicates disabling, the UE may determine not to enable the user plane encryption protection and determine to enable the user plane integrity protection. If the user plane activation indication information does not include the user plane integrity protection activation indication information and the user plane encryption protection activation indication information, the UE may determine not to enable the user plane integrity protection and the user plane encryption protection.

Correspondingly, the UE may activate the user plane security protection based on the received RRC connection reconfiguration message, and send an acknowledgment message of the RRC connection reconfiguration message, for example, an RRC connection reconfiguration acknowledgment (RRC connection reconfiguration ack) message, to the RAN device. In this case, user plane security protection of both the UE and the RAN device are activated, and the user plane secure connection between the UE and the RAN device is established.

S713: The RAN device sends an N2 PDU session response (N2 PDU session response) message to the AMF network element. Correspondingly, the AMF network element receives the N2 PDU session response message from the RAN device.

The N2 PDU session response message may be used to respond to the N2 PDU session request message. The N2 PDU session response message may include AN tunnel information, and the AN tunnel information is used by the UPF network element to send a data packet to the RAN device.

S714: The AMF network element sends a session management context update request (Nsmf_PDUSession_UpdateSMcontext request) message to the SMF network element. Correspondingly, the SMF network element receives the session management context update request message from the AMF network element.

The session management context update request message may be used to update an established PDU session, for example, include the AN tunnel information. After receiving the N2 PDU session response message, the AMF network element may include the AN tunnel information in the N2 PDU session response message into a service-based interface message supported by the SMF network element, for example, the session management context update request message, and then send the session management context update request message to the SMF network element, so that the SMF network element configures the UPF network element.

S715: The SMF network element sends an N4 session modification request (N4 session update request) message to the UPF network element. Correspondingly, the UPF network element receives the N4 session modification request message from the SMF network element.

The N4 session modification request message may be used to modify an N4 session, for example, include the AN tunnel information. After receiving the session management context update request message, the SMF network element may include the AN tunnel information in the session management context update request message into a service-based interface message supported by the UPF network element, for example, the N4 session modification request message, and then send the N4 session modification request message to the UPF network element, to modify the N4 session. In this way, the UPF network element may send the data packet to the RAN device based on the AN tunnel information.

S716: The UPF network element sends an N4 session modification response (N4 session update response) message to the SMF network element. Correspondingly, the SMF network element receives the N4 session modification response message from the UPF network element.

S717: The SMF network element sends a session management context update response (Nsmf_PDUSession_UpdateSMcontext response) message to the AMF network element. Correspondingly, the AMF network element receives the session management context update response message from the SMF network element.

The session management context update response message may indicate a PDU session update result, for example, PDU session update succeeds. In this case, both the RAN device and the UPF network element obtain tunnel information of each other, and the PDU session is established.

It may be learned from the foregoing procedure that, in a hop-by-hop protection scenario, the UE may send securely protected user plane data to the RAN device based on the user plane security protection. The RAN device may perform, based on the user plane security protection, de-security protection on the securely protected user plane data, to obtain plaintext user plane data. The RAN device may perform security protection on the plaintext user plane data according to IPsec, to send the securely protected user plane data to the UPF network element. In this case, although transmission of the securely protected user plane data is performed between the UE and the RAN device and between the RAN device and the UPF network element, in a transmission process, the RAN device obtains the plaintext user plane data in a de-security protection manner. Consequently, a risk of user plane data exposure increases. For example, when the RAN device is deployed in a physically insecure area, malicious behavior of an attacker may cause the user plane data exposure.

In conclusion, for the foregoing technical problem, embodiments of this application provide the following technical solutions, to reduce the risk of the user plane data exposure. The following describes technical solutions of this application with reference to accompanying drawings.

The technical solutions in embodiments of this application may be applied to various communication systems, for example, a wireless fidelity (wireless fidelity, Wi-Fi) system, a vehicle-to-everything (vehicle-to-everything, V2X) communication system, a device-to-device (device-to-device, D2D) communication system, an internet of vehicles communication system, a 4th generation (4th generation, 4G) mobile communication system such as a long term evolution (long term evolution, LTE) system and a worldwide interoperability for microwave access (worldwide interoperability for microwave access, WiMAX) communication system, a 5th generation (5th generation, 5G) mobile communication system such as a new radio (new radio, NR) system, and a future communication system such as a 6th generation (6th generation, 6G) mobile communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may alternatively be used.

In addition, in embodiments of this application, terms such as "example" and "for example" are used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

In embodiments of this application, "information (information)", "signal (signal)", "message (message)", "channel (channel)", and "signaling (signaling)" may be interchangeably used sometimes. It should be noted that meanings expressed by the terms are consistent when differences are not emphasized. The terms "of (of)", "corresponding (corresponding, relevant)", and "corresponding (corresponding)" may be interchangeably used sometimes. It should be noted that meanings expressed by the terms are consistent when differences are not emphasized. In addition, "/" mentioned in this application may indicate an "or" relationship.

In embodiments of this application, a subscript such as W1 may sometimes be written in a non-subscript form such as W1. Meanings expressed by the terms are consistent when differences are not emphasized.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

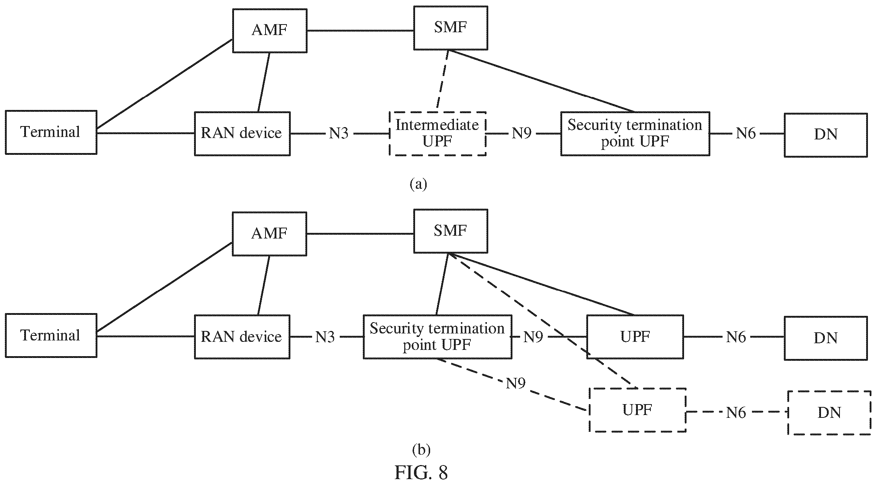

For ease of understanding embodiments of this application, a communication system shown in FIG. 8 is first used as an example to describe in detail a communication system applicable to embodiments of this application. For example, FIG. 8 is a schematic of an architecture of a communication system applicable to a communication method according to an embodiment of this application.

As shown in FIG. 8, the communication system includes a terminal, a RAN device, a UPF network element, an AMF network element, an SMF network element, and a DN. The UPF network element may support establishment of an IPsec connection to the terminal, and may be referred to as a security termination point UPF network element, or may be replaced with another description manner, for example, a security UPF network element. This is not specifically limited herein. That the UPF network element may support the establishment of the IPsec connection to the terminal may also be understood as that a secure connection is established between the UPF network element and the terminal according to an IPsec protocol. The secure connection may be an IPsec SA established between the UPF network element and the terminal.

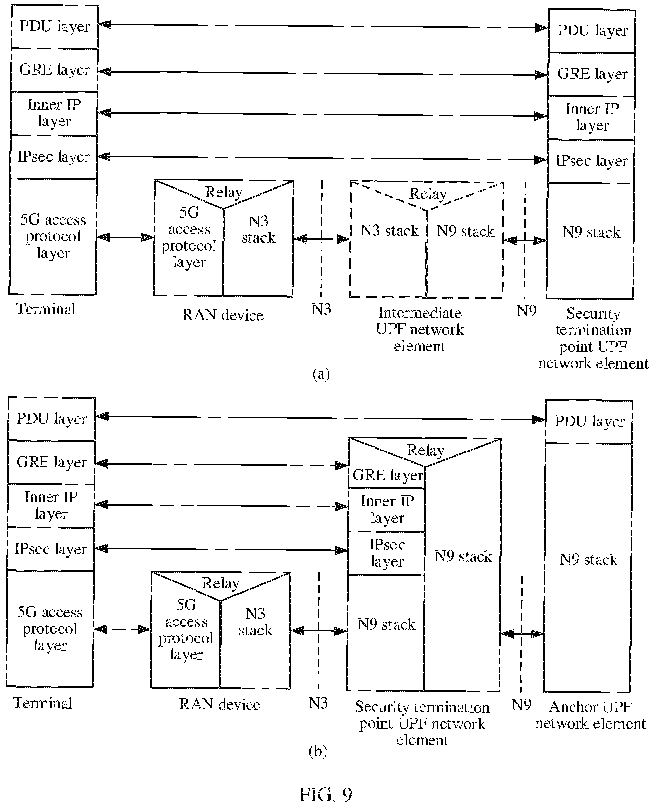

For example, as shown in (a) in FIG. 8, in the communication system, the security termination point UPF network element may be an anchor UPF network element of a PDU session (a UPF network element that accesses a DN through an N6 interface, or may be referred to as a PDU session anchor (PDU session anchor, PSA)), that is, an IPsec connection is established between the anchor UPF network element and the terminal. In this case, a protocol stack between the terminal and the security termination point UPF network element may be shown in (a) in FIG. 9. Both the terminal and the security termination point UPF network element support a PDU layer (layer), a generic routing encapsulation (generic routing encapsulation, GRE) layer, an inner (inner) IP layer, and an IPsec layer, so that both parties establish a PDU session and perform transmission of user plane data over IPsec. The RAN device supports a terminal-oriented 5G access (access, AN) protocol layer (5G-AN protocol layer), and supports an N3 stack (stack) oriented to an intermediate UPF network element (that is, a UPF network element located between the terminal and the security termination point UPF network element). The intermediate UPF network element supports an N3 stack oriented to the RAN device, and supports an N9 stack oriented to the security termination point UPF network element.

For another example, as shown in (b) in FIG. 8, in the communication system, the security termination point UPF network element may be an intermediate UPF network element of a PDU session, that is, an IPsec connection is established between the intermediate UPF network element and the terminal. In this case, a protocol stack between the terminal and the security termination point UPF network element may be shown in (b) in FIG. 9. The terminal and an anchor UPF network element support a PDU layer protocol, so that both parties establish a PDU session. The terminal and the security termination point UPF network element support a GRE layer, an inner IP layer, and an IPsec layer, so that both parties perform transmission of user plane data over IPsec. The RAN device may support a terminal-oriented 5G access protocol layer, and support an N3 stack oriented to the security termination point UPF network element. The security termination point UPF network element further supports an N9 stack oriented to the anchor UPF network element. For a protocol layer specifically included in the N3 stack and the N9 stack, refer to 3GPP TS 23.501. Details are not described again.

After an IPsec connection is established between the terminal and the security termination node UPF network element, the terminal or the security termination node UPF network element may be used as an endpoint device on the IPsec connection. In this case, when transmission of user plane data protected by IPsec is performed between endpoint devices, an intermediate transmission device (for example, a RAN device) located between the endpoint devices may directly perform transparent transmission of the user plane data. This reduces a risk of user plane data exposure.

In addition, establishing of the IPsec connection is described by using an example in which a function (denoted as a user plane security function) used to establish the IPsec connection is deployed on the UPF network element. This is not limited. For example, the user plane security function may alternatively be separated from the UPF network element, and is deployed on another network element or is independently deployed. In this case, the UPF network element, for example, the intermediate UPF network element or the anchor UPF network element, may forward downlink user plane data from the DN to the user plane security function. Correspondingly, the user plane security function may perform security protection on the downlink user plane data according to IPsec, to send securely protected downlink user plane data to the UPF network element, so that the UPF network element forwards the securely protected downlink user plane data to the terminal. Alternatively, the UPF network element may forward securely protected uplink user plane data from the terminal to the user plane security function. Correspondingly, the user plane security function may perform de-security protection on the securely protected uplink user plane data according to IPsec, to send uplink user plane data that is not securely protected to the UPF network element, so that the UPF network element forwards, to the DN, the uplink user plane data that is not securely protected. In this case, because the user plane data exchanged between the UPF network element and the terminal is still user plane data protected by IPsec, it may still be considered that the UPF network element is an endpoint device configured to establish an IPsec connection.

It may be understood that FIG. 8 is merely a simplified diagram of an example for ease of understanding. The communication system may further include another network device and/or another terminal device that are/is not shown in FIG. 8.

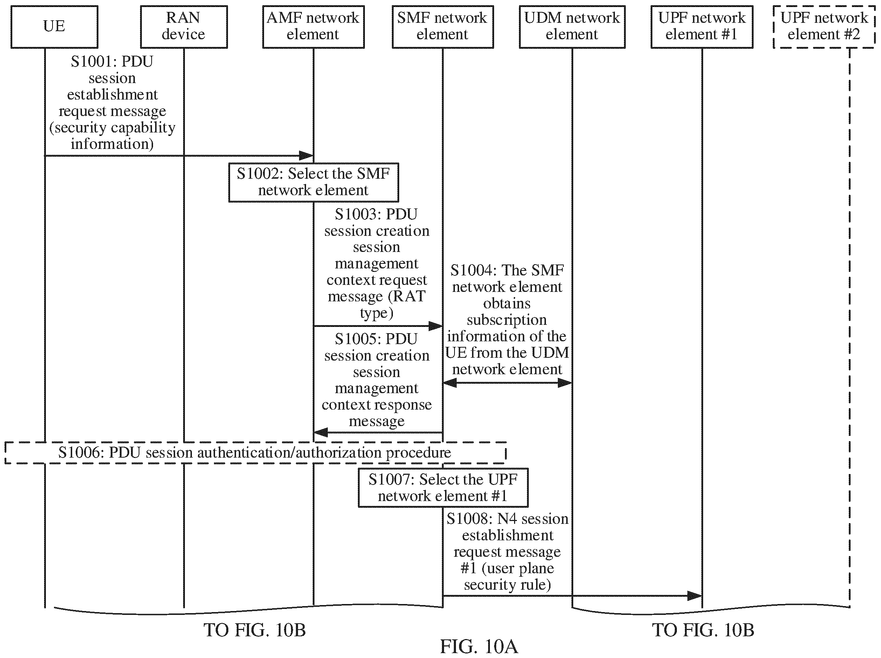

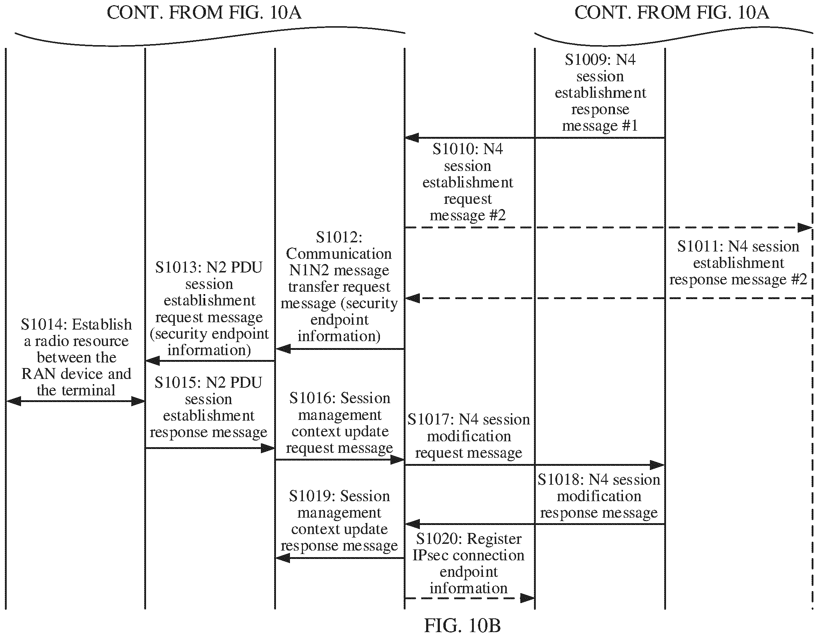

For ease of understanding, the following describes in detail a communication method according to embodiments of this application with reference to FIG. 10A and FIG. 10B to FIG. 14.

The communication method according to embodiments of this application is applicable to the foregoing communication system, and may be applied to the foregoing various scenarios. In different handover scenarios, procedures of the communication method may be different. The following specifically describes the procedures.

### Scenario 1:

For example, FIG. 10A and FIG. 10B are a first schematic flowchart of a communication method according to an embodiment of this application. In Scenario 1, an SMF network element may select, based on a RAT type of UE, a UPF network element that supports establishment of an IPsec connection, for example, a UPF network element #1, to trigger the UPF network element #1 to establish an IPsec connection to the UE. This reduces a risk of user plane data exposure.

Specifically, as shown in FIG. 10A and FIG. 10B, a procedure of the communication method is shown in the following.

S1001: The UE sends a NAS message to an AMF network element via a RAN device. Correspondingly, the AMF network element receives the NAS message from the UE via the RAN device.

The NAS message may include a PDU session establishment request message. For a specific implementation principle of the PDU session establishment request message, refer to related descriptions in S701. Details are not described again.

Optionally, the NAS message may include security capability information of the UE, and/or the PDU session establishment request message may include security capability information of the UE. The security capability information of the UE may indicate that the UE supports establishment of an IPsec connection to a CN. The security capability information of the UE may be implemented by an existing information element in the PDU session establishment request message, or may be implemented by defining a new information element. For example, a reserved field is defined as the security capability information of the UE. Certainly, if the PDU session establishment request message does not include the security capability information of the UE, it is considered by default that the UE supports the establishment of the IPsec connection to the CN, or the UE does not support the establishment of the IPsec connection to the CN. This is not specifically limited in this application.

It may be understood that the security capability information is merely an example name, and may be replaced with any possible name, for example, user plane security capability information or IPsec capability information. This is not specifically limited in this application.

S 1002: The AMF network element selects the SMF network element.

For a specific implementation principle of S 1002, refer to related descriptions in S702. Details are not described again.

S1003: The AMF network element sends a PDU session creation session management context request message to the SMF network element. Correspondingly, the SMF network element receives the PDU session creation session management context request message from the AMF network element. The message includes a RAT type.

If the security capability information is included in the NAS message, the AMF determines, based on the security capability information in the NAS message, that the PDU session creation session management context request message includes the security capability information. Optionally, the SMF network element may obtain the security capability information of the UE from the PDU session creation session management context request message or the PDU session establishment request message.

In addition, for a specific implementation principle of the PDU session creation session management context request message, refer to related descriptions in S703. Details are not described again.

S1004: The SMF network element obtains subscription information of the UE from a UDM network element.

S1005: The SMF network element sends a PDU session creation session management context response message to the AMF network element. Correspondingly, the AMF network element receives the PDU session creation session management context response message from the SMF network element.

S1006: The SMF network element performs a PDU session authentication/authorization procedure.

For specific implementation principles of S 1004 to S 1006, refer to related descriptions in S704 to S706. Details are not described again.

S1007: The SMF network element selects the UPF network element #1.

The UPF network element #1 is the UPF network element that supports the establishment of the IPsec connection to the UE, that is, a security termination point UPF network element.

The SMF network element may determine, based on the RAT type (S1003) of the UE from the AMF network element, a protection mechanism of user plane data, for example, whether to use a protection mechanism of establishing the IPsec connection between the UE and the UPF network element or a protection mechanism of establishing a user plane secure connection between the UE and the RAN device. For example, if the RAT type of the UE is not an NR SAT, the SMF network element determines to use the protection mechanism of establishing the user plane secure connection between the UE and the RAN device, and performs the existing procedure shown in FIG. 7. Details are not described again. Alternatively, if the RAT type of the UE is an NR SAT, the SMF network element determines to use the protection mechanism of establishing the IPsec connection between the UE and the UPF network element. The NR SAT may specifically include an NR low earth orbit (low earth orbit, LEO), an NR medium earth orbit (medium Earth orbit, MEO), an NR geostationary earth orbit (geostationary earth orbit, GEO), or another NR satellite access type (other SAT), such as a highly elliptical orbit. In addition, the SMF network element may alternatively determine, based on any other possible RAT type, to use the protection mechanism of establishing the IPsec connection between the UE and the UPF network element, or to use, by default, the protection mechanism of establishing the IPsec connection between the UE and the UPF network element.

In addition, the SMF network element may further determine, according to a user plane security policy of the UE in the subscription information of the UE, for example, a user plane encryption protection policy and a user plane integrity protection policy, whether the IPsec connection needs to be established between the UE and the UPF network element. For example, if both the user plane encryption protection policy and the user plane integrity protection policy are enabling not needed, the SMF network element determines that the IPsec connection does not need to be established between the UE and the UPF network element, and a PDU session establishment procedure continues to be performed, but the procedure no longer includes a procedure indicating to establish the IPsec connection between the UE and the UPF network element. Alternatively, if at least one of the user plane encryption protection policy and the user plane integrity protection policy is enabling, for example, is enabling required or enabling preferred, the SMF network element determines that the IPsec connection needs to be established between the UE and the UPF network element. Optionally, the SMF network element may alternatively determine, only when both the user plane encryption protection policy and the user plane integrity protection policy are enabling, that the IPsec connection needs to be established between the UE and the UPF network element.

When determining the protection mechanism of establishing the IPsec connection between the UE and the UPF network element and determining that the IPsec connection needs to be established between the UE and the UPF network element (optional), the SMF network element may select the UPF network element that supports the establishment of the IPsec connection to the UE, for example, the UPF network element #1, and determine a user plane security rule corresponding to the IPsec connection (refer to S1008).

In a first possible implementation, the SMF network element may determine the UPF network element #1 based on locally pre-stored information about each UPF network element, and no interaction between network elements is needed, thereby avoiding signaling exchange overheads.

In a second possible implementation, the SMF network element may send a network function (network function, NF) discovery request (Nnrf_NFDiscovery_request) message to an NRF network element (not shown in FIG. 10A and FIG. 10B). The NF discovery request message includes an NF type (NF type), for example, the NF type is a UPF network element, and the security capability information of the UE, to indicate that a discovered UPF network element needs to support establishment of an IPsec connection to the UE. The NF discovery request message may further include other information used to discover a UPF network element, for example, a data network name (data network name, DNN), single network slice selection assistance information (single network slice selection assistance information, S-NSSAI), or an SMF area identifier. The NRF network element may determine, based on the NF discovery request message, at least one candidate UPF network element that supports establishment of an IPsec connection to the UE. In this way, the NRF network element may send an NF discovery response (Nnrf_NFDiscovery_response) message to the SMF network element. The NF discovery response message may include information about each candidate UPF network element, for example, an address, load, and an area location of each candidate UPF network element. The address of the candidate UPF network element may be an internet protocol version 4 (internet protocol version 4, IPv4) or internet protocol version 6 (internet protocol version 6, IPv6) prefix, an IPv6 address, a fully qualified domain name (fully qualified domain name, FQDN), or the like. In this way, the SMF network element may select, from these candidate UPF network elements based on information about these candidate UPF network elements, a UPF network element suitable for a current session, that is, the UPF network element #1. The UPF network element #1 may be a UPF network element with low load or a UPF network element that is close to the UE.

It may be learned that, in the second possible implementation, the NRF network element provides the candidate UPF network element that supports establishment of an IPsec connection to the UE, so that the SMF network element does not need to determine whether the candidate UPF network element supports the establishment of the IPsec connection to the UE, to save resources of the SMF network element and improve running efficiency of the SMF network element.

In a third possible implementation, the SMF network element may send an NF discovery request message to an NRF network element. The NF discovery request message may include information similar to that in the second possible implementation, but does not include the security capability information of the UE. For example, the SMF network element does not obtain the security capability information of the UE, or the NF discovery request message does not carry the security capability information of the UE by default. The NRF network element may determine at least one candidate UPF network element based on the NF discovery request message. Each candidate UPF network element may be a UPF network element that supports establishment of an IPsec connection to the UE, or a UPF network element that does not support establishment of an IPsec connection to the UE. An NF discovery response message may include information in the second possible implementation, and further include information indicating whether each candidate UPF network element supports establishment of an IPsec connection to the UE. In this way, the SMF network element may select, from the candidate UPF network element based on information about the candidate UPF network element, the UPF network element #1 that is suitable for the current session and that supports IPsec.

It may be learned that, in the third possible implementation, the NRF network element needs to provide only related information about the candidate UPF network element, and does not need to determine whether the candidate UPF network element supports establishment of an IPsec connection to the UE, to save resources of the NRF network element, and improve running efficiency of the NRF network element.

S 1008: The SMF network element sends an N4 session establishment request message #1 to the UPF network element #1. Correspondingly, the UPF network element #1 receives the N4 session establishment request message #1 from the SMF network element.

The N4 session establishment request message #1 may include an N4 session identifier, a packet detection rule, and a user plane security rule.

The N4 session identifier may identify an N4 session. The packet detection rule may indicate the UPF network element #1 to perform corresponding processing, for example, QoS control or bypass, on a data packet that meets the packet detection rule. The packet detection rule includes packet detection information, a rule priority, and packet processing rule information. The packet processing rule information may include a rule identifier, for example, a QoS execution rule identifier or a user plane security rule identifier. The user plane security rule may be generated by the SMF network element, and is used to establish the IPsec connection between the UE and the UPF network element #1.

The user plane security rule may include identification information. Optionally, the user plane security rule may further include at least one of the following: a security protocol, encryption indication information, integrity protection indication information, or an encapsulation mode. These information elements may be indicated by a same information element, or may be indicated by different information elements. This is not specifically limited herein.

The identification information may identify the user plane security rule. The identification information may include at least one of the following: the user plane security rule identifier or the N4 session identifier. The N4 session identifier may identify that the user plane security rule is a user plane security rule of an N4 session, so that the UPF network element #1 can configure the user plane security rule. Certainly, the rule identifier may alternatively not include the N4 session identifier. In this case, an information element hierarchical relationship between the user plane security rule identifier and the N4 session identifier in the N4 session establishment request message #1 may implicitly indicate that the user plane security rule is a user plane security rule of an N4 session, to reduce communication overheads and improve communication efficiency.

The security protocol may indicate a security protocol used by the IPsec connection. The security protocol may include at least one of the following: an ESP protocol or an AH protocol, to indicate that the ESP protocol and/or the AH protocol may be used on the IPsec connection (for example, an IPsec child SA). Optionally, the SMF network element may determine the security protocol according to the user plane security policy of the UE in the subscription information of the UE (refer to S 1004). For example, if the user plane encryption protection policy of the UE is enabling, and the user plane integrity protection policy of the UE is enabling not needed, that is, only encryption protection is enabled, the SMF network element may set the security protocol to the ESP protocol. Alternatively, if the user plane encryption protection policy of the UE is enabling not needed, and the user plane integrity protection policy of the UE is enabling, that is, only integrity protection is enabled, the SMF network element may set the security protocol to the AH protocol. Alternatively, if both the user plane encryption protection policy and the user plane integrity protection policy of the UE are enabling, that is, both encryption and integrity protection are enabled, the SMF network element may set the security protocol to the ESP protocol, or a combination of the ESP protocol and the AH protocol. A specific implementation is not limited in this embodiment. In addition, for specific implementation principles of the ESP protocol and the AH protocol, refer to related descriptions in the foregoing "1. IPsec". Details are not described again.

The encryption indication information may indicate whether the encryption is performed for the IPsec connection. The integrity protection indication information may indicate whether the integrity protection is performed for the IPsec connection. It may be learned that the security protocol, the encryption indication information, and the integrity protection indication information may have a same indication function. For example, when the encryption indication information indicates that the encryption is performed for the IPsec connection, and the integrity protection indication information indicates that the integrity protection is performed for the IPsec connection, functions of the two pieces of indication information are equivalent to that of indicating the security protocol as the ESP protocol. For another example, when the encryption indication information indicates that the encryption is not performed for the IPsec connection, and the integrity protection indication information indicates that the integrity protection is performed for the IPsec connection, functions of the two indication information are equivalent to that of indicating the security protocol as the AH protocol. Therefore, the security protocol, the encryption indication information, and the integrity protection indication information may be selectively carried in the user plane security rule, or may all be carried in the user plane security rule.

The encapsulation mode indicates an encapsulation mode of a data packet on the IPsec connection. For example, the encapsulation mode may include any one of the following: a tunnel mode or a transport mode. In this way, different encapsulation modes are configured for different transmission scenarios, to ensure communication security in various transmission scenarios. For example, for a point-to-point transmission scenario, the transport mode may be configured. Alternatively, for a cross-network or cross-domain communication transmission scenario, the tunnel mode may be configured. In addition, for specific implementation principles of the tunnel mode and the transport mode, refer to related descriptions in the foregoing "1. IPsec". Details are not described again.

Optionally, the user plane security rule may further include at least one of the following: encryption algorithm indication information, integrity protection algorithm indication information, or hash (hash) algorithm indication information. The encryption algorithm indication information may indicate an encryption algorithm corresponding to the IPsec connection (for example, the IPsec child SA), for example, an advanced encryption standard (advanced encryption standard, AES) algorithm. The integrity protection algorithm indication information may indicate an integrity protection algorithm corresponding to the IPsec connection (for example, the IPsec child SA), for example, an SHA-256 or SHA-512 algorithm. The hash algorithm indication information may indicate a hash algorithm corresponding to the IPsec connection (for example, the IPsec child SA), for example, a secure hash algorithm (secure hash algorithm, SHA).

It may be understood that the user plane security rule may alternatively not include the foregoing information. For example, which one or more of the security protocol, the encryption indication information, the integrity protection indication information, the encapsulation mode, the encryption algorithm indication information, the integrity protection algorithm indication information, or the hash algorithm indication information are included in the user plane security rule are separately negotiated by the UE and the UPF network element #1 in a process of establishing the IPsec connection, to reduce communication overheads and improve communication efficiency.

It may be further understood that the user plane security rule is merely an example name, and may be replaced with any possible name, for example, a user plane secure connection rule or a user plane IPsec rule. This is not specifically limited in this application.

S1009: The UPF network element #1 sends an N4 session establishment response message #1 to the SMF network element. Correspondingly, the SMF network element receives the N4 session establishment response message #1 from the UPF network element #1.

The UPF network element #1 completes configuration based on the N4 session establishment request message #1. For example, after completing configuration of the user plane security rule, the UPF network element #1 may send the N4 session establishment response message #1 to the SMF network element, to respond to the N4 session establishment request message #1. The N4 session establishment response message #1 may include CN tunnel information of the N4 session, where the CN tunnel information of the N4 session is used by the RAN device to send a user plane data packet to the UPF network element #1.

S1010: The SMF network element sends an N4 session establishment request message #2 to a UPF network element #2. Correspondingly, the UPF network element #2 receives the N4 session establishment request message #2 from the SMF network element.

S1011: The UPF network element #2 sends an N4 session establishment response message #2 to the SMF network element. Correspondingly, the SMF network element receives the N4 session establishment response message #2 from the UPF network element #2.

For specific implementation principles of S1010 and S1011, refer to related descriptions in S708 and S709. Details are not described again.

It should be noted that S1010 and S1011 are optional steps, and are applicable to a scenario in which a PDU session is served by a plurality of UPF network elements. In this case, if the UPF network element #1 is an intermediate UPF network element, and the UPF network element #2 is an anchor UPF network element, S 1008 and S1009 are first performed, and then S 1010 and S 1011 are performed. If the UPF network element #1 is an anchor UPF network element, and the UPF network element #2 is an intermediate UPF network element, S1010 and S1011 are first performed, and then S1008 and S1009 are performed.

S1012: The SMF network element sends a communication N1N2 message transfer request message to the AMF network element. Correspondingly, the AMF network element receives the communication N1N2 message transfer request message from the SMF network element.

The communication N1N2 message transfer request message may include N2 SM information and an N1 SM container.

The N2 SM information carries the CN tunnel information of the N4 session and the user plane security policy of the UE. The user plane security policy of the UE may be that the user plane encryption protection policy and the user plane integrity protection policy are enabling not needed. For example, the SMF network element may obtain the user plane encryption protection policy and the user plane integrity protection policy from the UDM network element or locally. In this case, if at least one of the user plane encryption protection policy and the user plane integrity protection policy is enabling required or enabling preferred, when determining to use the protection mechanism of establishing the IPsec connection between the UE and the UPF network element, the SMF network element determines that the user plane encryption protection policy and the user plane integrity protection policy that are sent to the RAN device are enabling not needed. In other words, when the IPsec connection is established between the UE and the UPF network element #1, the RAN device may be indicated not to enable user plane encryption and integrity protection, to save resources and improve a service life of the device.

The N1 SM container includes security endpoint information. For example, the security endpoint information may be carried in a protocol configuration option (protocol configuration option, PCO) information element of the N1 SM container. The security endpoint information may indicate that an endpoint device that establishes an IPsec connection to the UE is the UPF network element #1, or indicate that the UE needs to establish the IPsec connection to the UPF network element #1. The security endpoint information may include an address of the UPF network element #1.

Optionally, the security endpoint information may further include at least one of the following: the security protocol, the encryption indication information, the integrity protection indication information, the encapsulation mode, the encryption algorithm indication information, the integrity protection algorithm indication information, or the hash algorithm indication information. For a specific implementation principle, refer to related descriptions in S1008. Details are not described again. In addition, the security protocol in the security endpoint information may be replaced with the user plane security policy of the UE in S1004 or indication information of the user plane security policy, so that the UE determines the security protocol according to the user plane security policy or the indication information. For example, if the user plane encryption protection policy of the UE is enabling, and the user plane integrity protection policy of the UE is enabling not needed, that is, only the encryption protection is enabled, the UE may determine that the security protocol is the ESP protocol. Alternatively, if the user plane encryption protection policy of the UE is enabling not needed, and the user plane integrity protection policy of the UE is enabling, that is, only the integrity protection is enabled, the UE may determine that the security protocol is the AH protocol. Alternatively, if both the user plane encryption protection policy and the user plane integrity protection policy of the UE are enabling, that is, both the encryption and the integrity protection are enabled, the UE may determine that the security protocol is the ESP protocol or a combination of the ESP protocol and the AH protocol. A specific implementation is not limited in this embodiment.

Optionally, if the UPF network element #1 needs to be authenticated to ensure communication security, the security endpoint information may further include a credential for authenticating the UPF network element #1, for example, root certificate of a certificate or public key information of a certificate for verifying the UPF network element #1.

It may be understood that the security endpoint information may alternatively not include the foregoing information. For example, which one or more of the security protocol, the encryption indication information, the integrity protection indication information, the encapsulation mode, the encryption algorithm indication information, the integrity protection algorithm indication information, or the hash algorithm indication information are included in the user plane security rule are separately negotiated by the UE and the UPF network element #1 in the process of establishing the IPsec connection, to reduce communication overheads and improve communication efficiency.

It may be further understood that the security endpoint information is merely an example name, and may be replaced with any possible name, for example, user plane security endpoint information or user plane IPsec endpoint information. This is not specifically limited in this application. In addition, the security endpoint information may be optional information. For example, the UE establishes the IPsec connection to the UPF network element #1 by default. In this case, the N1 SM container may not include the security endpoint information.

S1013: The AMF network element sends an N2 PDU session establishment request message to the RAN device. Correspondingly, the RAN device receives the N2 PDU session establishment request message from the AMF network element.

The N2 PDU session establishment request message may include the N2 SM information and a non-access stratum (non-access stratum, NAS) message. The NAS message may include the N1 SM container. In other words, after receiving a service-based interface message, for example, the communication N1N2 message transfer request message, the AMF network element may obtain the N2 SM information and the N1 SM container from the service-based interface message. The AMF network element may encapsulate the N1 SM container into the NAS message, then encapsulate the NAS message and the N2 SM information into a message supported by the RAN device, for example, the N2 PDU session establishment request message, and further send the N2 PDU session establishment request message to the RAN device.

S1014: Establish a radio resource between the RAN device and the UE.

The RAN device may send an RRC connection reconfiguration message to the UE. The RRC connection reconfiguration message may be used to configure the radio resource between the RAN device and the terminal, so that the RAN device communicates with the UE based on the radio resource.

It may be understood that because the UE may obtain the security endpoint information from the NAS message, and the UPF network element #1 may obtain the user plane security rule from the N4 session establishment request message #1, the IPsec connection between the two parties may be established based on the information. For example, the UE serves as an initiator and the UPF network element #1 serves as a responder, or the UPF network element #1 serves as an initiator and the UE serves as a responder. Both parties establish an IPsec child SA corresponding to a new PDU session, for example, first establish an IKE SA, and establish the IPsec child SA based on the IKE SA. For a specific implementation principle, refer to related descriptions in the foregoing "2. IPsec establishment procedure". Details are not described again.

Optionally, if the UPF network element #1 needs to be authenticated, the UE may verify the UPF network element #1 based on the credential in the security endpoint information. If the UPF network element #1 is authenticated, the IPsec connection is established. If the UPF network element #1 is not authenticated, the procedure ends.

S1015: The RAN device sends an N2 PDU session establishment response message to the AMF network element. Correspondingly, the AMF network element receives the N2 PDU session establishment response message from the RAN device.

S1016: The AMF network element sends a session management context update request message to the SMF network element. Correspondingly, the SMF network element receives the session management context update request message from the AMF network element.

S1017: The SMF network element sends an N4 session modification request message to the UPF network element. Correspondingly, the UPF network element receives the N4 session modification request message from the SMF network element.

S1018: The UPF network element sends an N4 session modification response message to the SMF network element. Correspondingly, the SMF network element receives the N4 session modification response message from the UPF network element.

S1019: The SMF network element sends a session management context update response message to the AMF network element. Correspondingly, the AMF network element receives the session management context update response message from the SMF network element.

For specific implementation principles of S 1015 to S1019, refer to related descriptions in S713 to S717. Details are not described again.

S1020: The SMF network element registers IPsec connection endpoint information with the UDM network element.

The IPsec connection endpoint information indicates the UPF network element #1 on the IPsec connection, for example, includes the address of the UPF network element #1, and is used to subsequently reuse the UPF network element #1 to continue to establish the IPsec connection. In this way, the UDM network element may store the IPsec connection endpoint information in the subscription information of the UE. It may be understood that S1020 is an optional step. For example, the SMF network element may alternatively not register the IPsec connection endpoint information with the UDM network element, or the SMF network element locally stores the IPsec connection endpoint information. The IPsec connection endpoint information is merely an example name, and may be replaced with any possible name, for example, IPsec endpoint information or IPsec connection information. This is not specifically limited herein.

In addition, a sequence of performing S1012 to S1019 and S 1020 is not limited.

### Scenario 2:

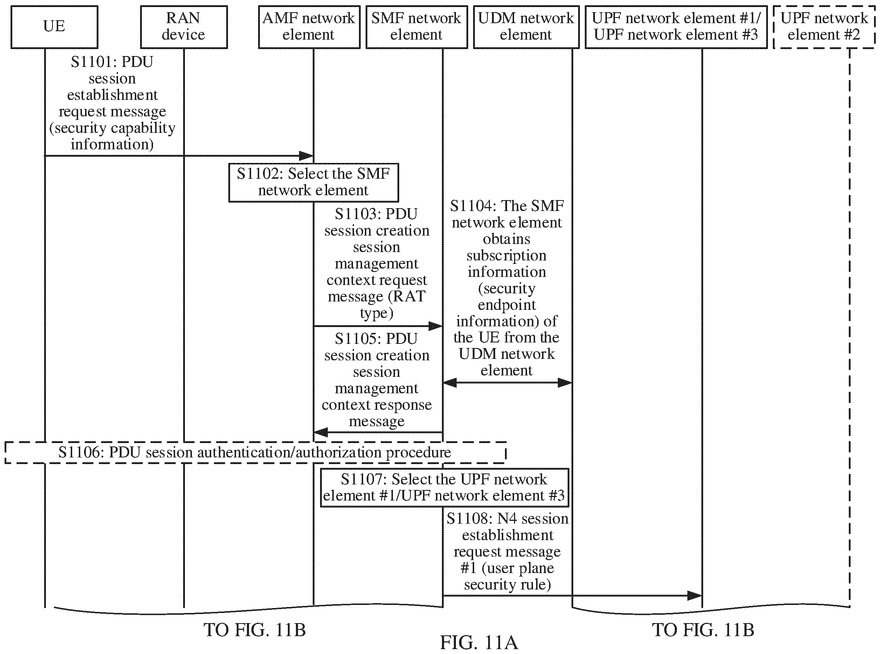

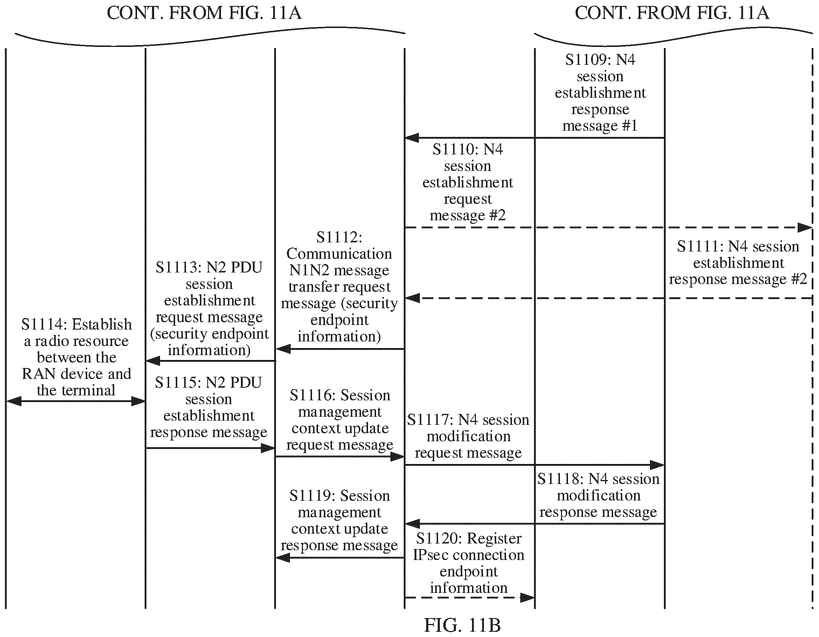

For example, FIG. 11A and FIG. 11B are a second schematic flowchart of a communication method according to an embodiment of this application. In Scenario 2, an SMF network element may reuse, based on a RAT type of UE, a UPF network element on an established IPsec connection, for example, a UPF network element #1, to establish an IPsec connection to the UE. This reduces a risk of user plane data exposure, reduces overheads of a RAN device, and improves a service life.

Specifically, as shown in FIG. 11A and FIG. 11B, a procedure of the communication method is shown in the following.

S1101: The UE sends a PDU session establishment request message to an AMF network element via the RAN device. Correspondingly, the AMF network element receives the PDU session establishment request message from the UE via the RAN device.

S1102: The AMF network element selects the SMF network element.

S1103: The AMF network element sends a PDU session creation session management context request message to the SMF network element. Correspondingly, the SMF network element receives the PDU session creation session management context request message from the AMF network element.

For a specific implementation principle of S1101, refer to related descriptions in S 1001. For specific implementation principles of S 1102 and S1103, refer to related descriptions in S702 and S703. Details are not described again.

S1104: The SMF network element obtains subscription information of the UE from a UDM network element.

The subscription information of the UE may include a user plane security policy of the UE. For a specific implementation principle, refer to related descriptions in S704. Details are not described again. Optionally, the subscription information of the UE may further include IPsec connection endpoint information. The IPsec connection endpoint information may be registered with the UDM network element by the SMF network element when an IPsec connection is previously established. The IPsec connection endpoint information may indicate that an endpoint device that previously establishes an IPsec connection to the UE is the UPF network element #1, and the UPF network element #1 may also be referred to as an original security endpoint.

S 1105: The SMF network element sends a PDU session creation session management context response message to the AMF network element. Correspondingly, the AMF network element receives the PDU session creation session management context response message from the SMF network element.

S1106: The SMF network element performs a PDU session authentication/authorization procedure.

For specific implementation principles of S1105 and S1106, refer to related descriptions in S705 and S706. Details are not described again.

S 1107: The SMF network element determines to reuse the UPF network element #1 or select a UPF network element #3.

The UPF network element #3 is a UPF network element that supports establishment of an IPsec connection to the UE.

Specifically, the SMF network element determines that the IPsec connection may be and needs to be established between the UE and the UPF network element. For a specific implementation principle, refer to related descriptions in S1007. Details are not described again. On this basis, the SMF network element may determine whether the IPsec connection endpoint information is locally pre-stored. If the IPsec connection endpoint information is locally stored, the SMF network element may determine, based on the IPsec connection endpoint information, whether to reuse the original security endpoint, that is, whether to reuse the UPF network element #1. That the SMF network element locally stores the IPsec connection endpoint information indicates that the SMF network element and an SMF network element that previously establishes an IPsec connection may be a same network element. If the IPsec connection endpoint information is not locally stored, the SMF network element determines whether the subscription information of the UE includes the IPsec connection endpoint information. That the SMF network element does not locally store the IPsec connection endpoint information indicates that the SMF network element and an SMF network element that previously establishes an IPsec connection may be different network elements. If the subscription information of the UE includes the IPsec connection endpoint information, the SMF network element determines, based on the IPsec connection endpoint information, whether to reuse the original security endpoint, that is, whether to reuse the UPF network element #1. If the subscription information of the UE does not include the IPsec connection endpoint information, the SMF network element may alternatively interact with an NRF network element, to select a new security endpoint, for example, the UPF network element #3. For a specific implementation principle, refer to related descriptions in S1007. Details are not described again.

Whether the SMF network element reuses the UPF network element #1 may depend on a status of the UPF network element #1. If the status of the UPF network element #1 is suitable for an IPsec connection currently established to the UE, for example, load of the UPF network element #1 is low or the UPF network element #1 is close to the UE, the SMF network element reuses the UPF network element #1, and performs S1108. If the status of the UPF network element #1 is not suitable for an IPsec connection currently established to the UE, for example, load of the UPF network element #1 is high or the UPF network element #1 is far from the UE, the SMF network element may interact with the NRF network element, to select the new security endpoint. For a specific implementation principle, refer to related descriptions in S1007. Details are not described again. Alternatively, the SMF network element may reuse or not reuse the UPF network element #1 by default based on a local configuration.

S 1108: The SMF network element sends an N4 session establishment request message #1 to the UPF network element #1/UPF network element #3. Correspondingly, the UPF network element #1/UPF network element #3 receives the N4 session establishment request message #1 from the SMF network element.

The N4 session establishment request message #1 may include an N4 session identifier, a packet detection rule, and a user plane security rule. For a specific implementation, refer to related descriptions in S 1008. Details are not described again. It should be noted that, if the original security endpoint is reused, S1108 may be used to update a local user plane security rule of the UPF network element #1. For example, the user plane security rule includes an address of UE corresponding to a new PDU session, and indicates to create a new IPsec child SA for the new PDU session, or update an existing IPsec child SA, for example, add the address of the UE to an address segment of the existing IPsec child SA. If the new security endpoint is selected, S1108 may be used to configure the user plane security rule for the UPF network element #3.

S1109: The UPF network element #1/UPF network element #3 sends an N4 session establishment response message #1 to the SMF network element. Correspondingly, the SMF network element receives the N4 session establishment response message #1 from the UPF network element #1/UPF network element #3.

S1110: The SMF network element sends an N4 session establishment request message #2 to a UPF network element #2. Correspondingly, the UPF network element #2 receives the N4 session establishment request message #2 from the SMF network element.

S1111: The UPF network element #2 sends an N4 session establishment response message #2 to the SMF network element. Correspondingly, the SMF network element receives the N4 session establishment response message #2 from the UPF network element #2.

For specific implementation principles of S 1110 and S 1111, refer to related descriptions in S708 and S709. Details are not described again.

It should be noted that S1110 and S1111 are optional steps, and are applicable to a scenario in which a PDU session is served by a plurality of UPF network elements. In this case, if the UPF network element #1/UPF network element #3 is an intermediate UPF network element, and the UPF network element #2 is an anchor UPF network element, S1108 and S1109 are first performed, and then S 1110 and S 1111 are performed. If the UPF network element #1/UPF network element #3 is an anchor UPF network element, and the UPF network element #2 is an intermediate UPF network element, S1110 and S1111 are first performed, and then S1108 and S1109 are performed.

S1112: The SMF network element sends a communication N1N2 message transfer request message to the AMF network element. Correspondingly, the AMF network element receives the communication N1N2 message transfer request message from the SMF network element.

S1113: The AMF network element sends an N2 PDU session establishment request message to the RAN device. Correspondingly, the RAN device receives the N2 PDU session establishment request message from the AMF network element.

For specific implementation principles of S1112 and S1113, refer to related descriptions in S1012 and S1013. Details are not described again.

S1114: Establish a specific resource between the RAN device and the UE.

The RAN device may send an RRC connection reconfiguration message and a NAS message to the UE. The RRC connection reconfiguration message may be used to configure the specific resource between the RAN device and the terminal, for example, a corresponding radio resource. For a specific implementation principle, refer to related descriptions in S712. Details are not described again.

It may be understood that because the UE may obtain security endpoint information from the NAS message, and the UPF network element #1/UPF network element #3 may obtain the user plane security rule from the N4 session establishment request message #1, an IPsec connection between the two parties may be established based on the information. For example, the UE serves as an initiator and the UPF network element #1 serves as a responder, or the UPF network element #1 serves as an initiator and the UE serves as a responder. Both parties establish an IPsec child SA corresponding to a new PDU session, for example, first establish an IKE SA, and establish the IPsec child SA based on the IKE SA. For a specific implementation principle, refer to related descriptions in the foregoing "2. IPsec establishment procedure". Details are not described again. Alternatively, both parties update the established IPsec child SA, for example, add, to an address segment of an existing IPsec child SA, an IP address of UE corresponding to the new PDU session. For another example, the UE serves as an initiator and the UPF network element #3 serves as a responder, or the UPF network element #3 serves as an initiator and the UE serves as a responder. Both parties establish an IPsec child SA corresponding to a new PDU session, for example, first establish an IKE SA, and establish the IPsec child SA based on the IKE SA. For a specific implementation principle, refer to related descriptions in the foregoing "2. IPsec establishment procedure". Details are not described again.

Optionally, if the UPF network element #1/UPF network element #3 needs to be authenticated, the UE may verify the UPF network element #1/UPF network element #3 based on a credential in the security endpoint information. If the UPF network element #1/UPF network element #3 is authenticated, the IPsec connection is established. If the UPF network element #1/UPF network element #3 is not authenticated, the procedure ends.

S1115: The RAN device sends an N2 PDU session establishment response message to the AMF network element. Correspondingly, the AMF network element receives the N2 PDU session establishment response message from the RAN device.

S1116: The AMF network element sends a session management context update request message to the SMF network element. Correspondingly, the SMF network element receives the session management context update request message from the AMF network element.

S1117: The SMF network element sends an N4 session modification request message to the UPF network element. Correspondingly, the UPF network element receives the N4 session modification request message from the SMF network element.

S1118: The UPF network element sends an N4 session modification response message to the SMF network element. Correspondingly, the SMF network element receives the N4 session modification response message from the UPF network element.

S1119: The SMF network element sends a session management context update response message to the AMF network element. Correspondingly, the AMF network element receives the session management context update response message from the SMF network element.

For specific implementation principles of S 1115 to S1119, refer to related descriptions in S713 to S717. Details are not described again.

S1120: The SMF network element registers IPsec connection endpoint information with the UDM network element.

If an IPsec connection between the UE and the UPF network element #3 is established, the SMF network element may further register the IPsec connection endpoint information with the UDM network element. The IPsec connection endpoint information is different from the IPsec connection endpoint information in S1104, may be considered as new IPsec connection endpoint information, and indicates that an endpoint device on the IPsec connection is the UPF network element #3, for example, includes an address of the UPF network element #3, so that the UPF network element #3 is subsequently reused to continue to establish an IPsec connection. In this way, the UDM network element may update the IPsec connection endpoint information in the subscription information of the UE based on the new IPsec connection endpoint information.

It may be understood that S 1120 is an optional step. For example, the SMF network element may alternatively not register the new IPsec connection endpoint information with the UDM network element.

### Scenario 3:

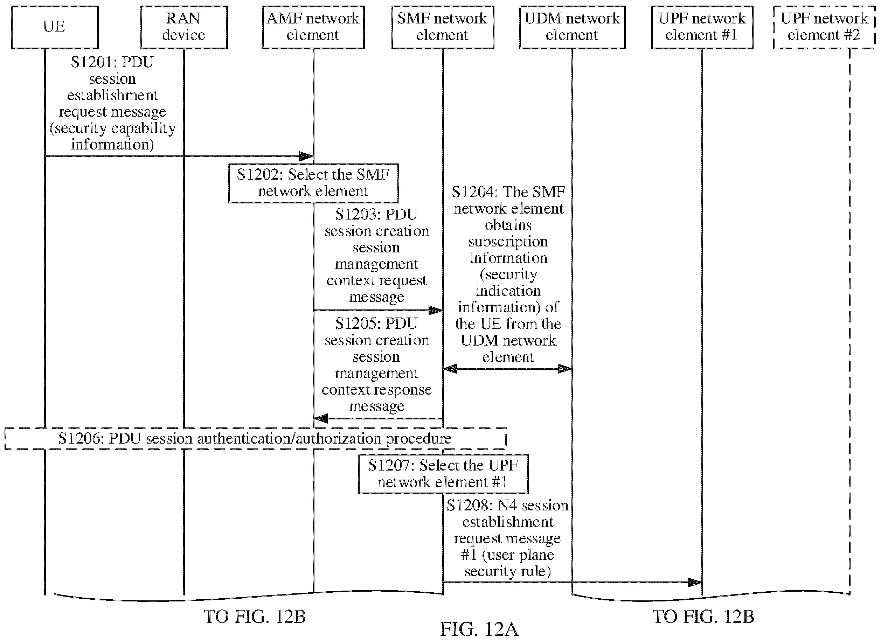

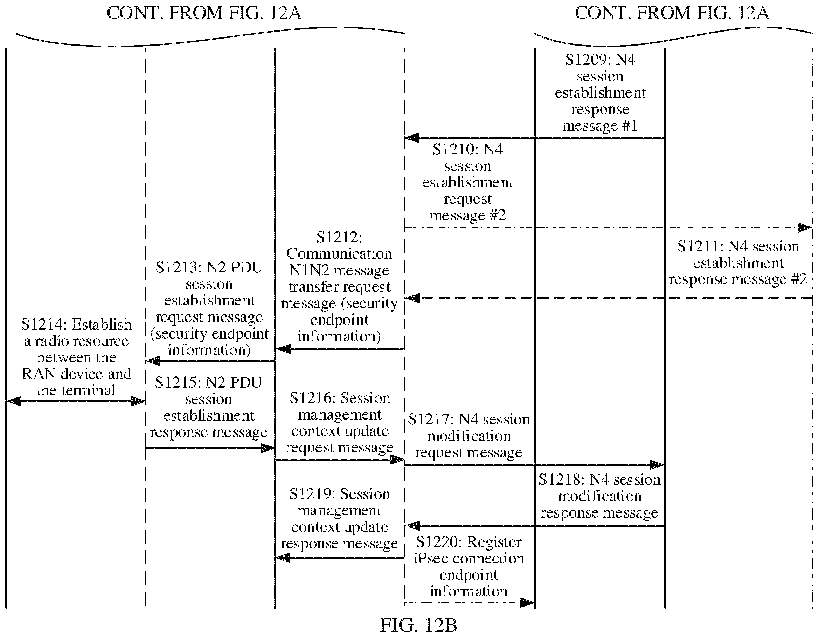

For example, FIG. 12A and FIG. 12B are a third schematic flowchart of a communication method according to an embodiment of this application. In Scenario 3, an SMF network element may select, based on security indication information, a UPF network element that supports an IPsec connection, for example, a UPF network element #1, to trigger the UPF network element #1 to establish an IPsec connection to UE. This reduces a risk of user plane data exposure.

Specifically, as shown in FIG. 12A and FIG. 12B, a procedure of the communication method is shown in the following.

S1201: The UE sends a PDU session establishment request message to an AMF network element via a RAN device. Correspondingly, the AMF network element receives the PDU session establishment request message from the UE via the RAN device.

S1202: The AMF network element selects the SMF network element.

S1203: The AMF network element sends a PDU session creation session management context request message to the SMF network element. Correspondingly, the SMF network element receives the PDU session creation session management context request message from the AMF network element.

For a specific implementation principle of S1201, refer to related descriptions in S 1001. For specific implementation principles of S1202 and S 1203, refer to related descriptions in S702 and S703. Details are not described again.

S1204: The SMF network element obtains subscription information of the UE from a UDM network element.

The subscription information of the UE may include a user plane security policy of the UE. For a specific implementation principle, refer to related descriptions in S704. Details are not described again. The subscription information of the UE may further include security indication information. The security indication information may indicate that a user plane secure connection between the UE and the UPF network element is used to protect user plane data, or indicate that an IPsec connection may be established between the UE and the UPF network element. The security indication information may be end to end (end to end, E2E) security indication information, or any other possible indication information. This is not specifically limited herein.

S1205: The SMF network element sends a PDU session creation session management context response message to the AMF network element. Correspondingly, the AMF network element receives the PDU session creation session management context response message from the SMF network element.

S1206: The SMF network element performs a PDU session authentication/authorization procedure.

For specific implementation principles of S 1205 and S1206, refer to related descriptions in S705 and S706. Details are not described again.

S1207: The SMF network element selects the UPF network element #1.

The UPF network element #1 is a UPF network element that supports establishment of an IPsec connection to the UE.

Specifically, the SMF network element may determine, based on the security indication information, to enable user plane security protection between the UE and the UPF network element, in other words, the IPsec connection may be established between the UE and the UPF network element. In addition, the SMF network element may further determine that the IPsec connection needs to be established between the UE and the UPF network element. For a specific implementation principle, refer to related descriptions in S1007. Details are not described again. When determining to enable the user plane security protection between the UE and the UPF network element, and determining that the IPsec connection needs to be established between the UE and the UPF network element (optional), the SMF network element may select the UPF network element that supports the establishment of the IPsec connection to the UE, for example, the UPF network element #1, and determine a user plane security rule corresponding to the IPsec connection (refer to S 1008).

S1208: The SMF network element sends an N4 session establishment request message #1 to the UPF network element #1. Correspondingly, the UPF network element #1 receives the N4 session establishment request message #1 from the SMF network element.

S1209: The UPF network element #1 sends an N4 session establishment response message #1 to the SMF network element. Correspondingly, the SMF network element receives the N4 session establishment response message #1 from the UPF network element #1.

S1210: The SMF network element sends an N4 session establishment request message #2 to a UPF network element #2. Correspondingly, the UPF network element #2 receives the N4 session establishment request message #2 from the SMF network element.

S1211: The UPF network element #2 sends an N4 session establishment response message #2 to the SMF network element. Correspondingly, the SMF network element receives the N4 session establishment response message #2 from the UPF network element #2.

S1212: The SMF network element sends a communication N1N2 message transfer request message to the AMF network element. Correspondingly, the AMF network element receives the communication N1N2 message transfer request message from the SMF network element.

S1213: The AMF network element sends an N2 PDU session establishment request message to the RAN device. Correspondingly, the RAN device receives the N2 PDU session establishment request message from the AMF network element.

S1214: Establish a specific resource between the RAN device and the UE.

For specific implementation principles of S1210 and S1211, refer to related descriptions in S1008 and S1009. For specific implementation principles of S1210 and S1211, refer to related descriptions in S708 and S709 and S1010 and S1011. For specific implementation principles of S1212 to S1214, refer to related descriptions in S1012 to S1014. Details are not described again.

S1215: The RAN device sends an N2 PDU session establishment response message to the AMF network element. Correspondingly, the AMF network element receives the N2 PDU session establishment response message from the RAN device.

S1216: The AMF network element sends a session management context update request message to the SMF network element. Correspondingly, the SMF network element receives the session management context update request message from the AMF network element.

S1217: The SMF network element sends an N4 session modification request message to the UPF network element. Correspondingly, the UPF network element receives the N4 session modification request message from the SMF network element.

S1218: The UPF network element sends an N4 session modification response message to the SMF network element. Correspondingly, the SMF network element receives the N4 session modification response message from the UPF network element.

S1219: The SMF network element sends a session management context update response message to the AMF network element. Correspondingly, the AMF network element receives the session management context update response message from the SMF network element.

For specific implementation principles of S1215 to S1219, refer to related descriptions in S713 to S717. Details are not described again.

S1220: The SMF network element registers IPsec connection endpoint information with the UDM network element.

For a specific implementation principle of S1220, refer to related descriptions in S 1020. Details are not described again.

### Scenario 4:

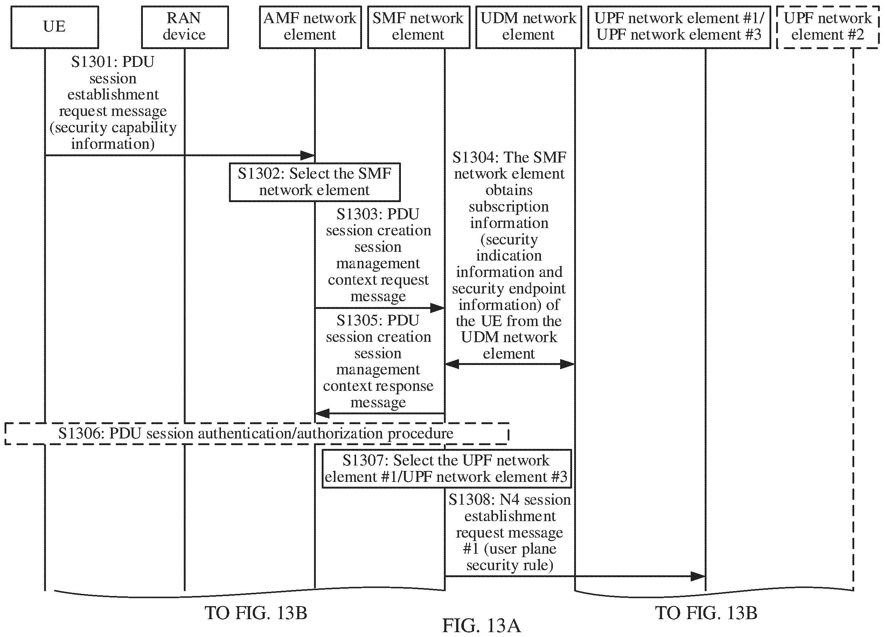

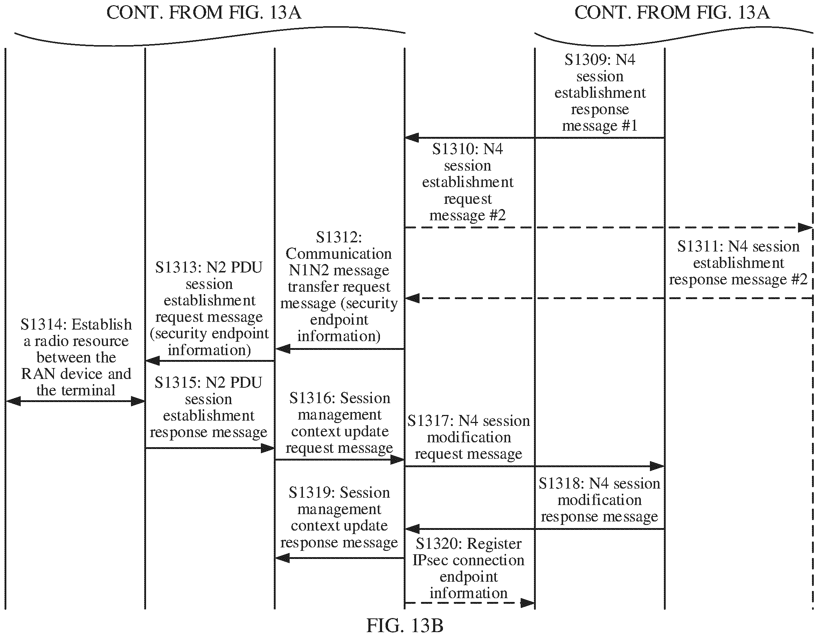

For example, FIG. 13A and FIG. 13B are a fourth schematic flowchart of a communication method according to an embodiment of this application. In Scenario 4, an SMF network element may reuse, based on security indication information, a UPF network element that has established an IPsec connection, for example, a UPF network element #1, to establish an IPsec connection to UE. This reduces a risk of user plane data exposure.

Specifically, as shown in FIG. 13A and FIG. 13B, a procedure of the communication method is shown in the following.

S1301: The UE sends a PDU session establishment request message to an AMF network element via a RAN device. Correspondingly, the AMF network element receives the PDU session establishment request message from the UE via the RAN device.

S1302: The AMF network element selects the SMF network element.

S1303: The AMF network element sends a PDU session creation session management context request message to the SMF network element. Correspondingly, the SMF network element receives the PDU session creation session management context request message from the AMF network element.

For a specific implementation principle of S1301, refer to related descriptions in S 1001. For specific implementation principles of S1302 and S1303, refer to related descriptions in S702 and S703. Details are not described again.

S1304: The SMF network element obtains subscription information of the UE from a UDM network element.

The subscription information of the UE may include a user plane security policy of the UE, security indication information, and IPsec connection endpoint information. For a specific implementation principle of the user plane security policy of the UE, refer to related descriptions in S704. For a specific implementation principle of the security indication information, refer to related descriptions in S1204. For a specific implementation principle of the IPsec connection endpoint information, refer to related descriptions in S1104. Details are not described again.

S1305: The SMF network element sends a PDU session creation session management context response message to the AMF network element. Correspondingly, the AMF network element receives the PDU session creation session management context response message from the SMF network element.

S1306: The SMF network element performs a PDU session authentication/authorization procedure.

For specific implementation principles of S1305 and S1306, refer to related descriptions in S705 and S706. Details are not described again.

S1307: The SMF network element determines to reuse the UPF network element #1 or select a UPF network element #3.

The UPF network element #3 is a UPF network element that supports establishment of an IPsec connection to the UE.

Specifically, the SMF network element determines that the IPsec connection may be and needs to be established between the UE and the UPF network element. For a specific implementation principle, refer to related descriptions in S1207. Details are not described again. On this basis, the SMF network element determines, based on the IPsec connection endpoint information, whether to reuse an original security endpoint, that is, whether to reuse the UPF network element #1, or select a new security endpoint, for example, the UPF network element #3. For a specific implementation principle, refer to related descriptions in S1107. Details are not described again.

S1308: The SMF network element sends an N4 session establishment request message #1 to the UPF network element #1/UPF network element #3. Correspondingly, the UPF network element #1/UPF network element #3 receives the N4 session establishment request message #1 from the SMF network element.

S1309: The UPF network element #1/UPF network element #3 sends an N4 session establishment response message #1 to the SMF network element. Correspondingly, the SMF network element receives the N4 session establishment response message #1 from the UPF network element #1/UPF network element #3.

S1310: The SMF network element sends an N4 session establishment request message #2 to a UPF network element #2. Correspondingly, the UPF network element #2 receives the N4 session establishment request message #2 from the SMF network element.

S1311: The UPF network element #2 sends an N4 session establishment response message #2 to the SMF network element. Correspondingly, the SMF network element receives the N4 session establishment response message #2 from the UPF network element #2.

S1312: The SMF network element sends a communication N1N2 message transfer request message to the AMF network element. Correspondingly, the AMF network element receives the communication N1N2 message transfer request message from the SMF network element.

S1313: The AMF network element sends an N2 PDU session establishment request message to the RAN device. Correspondingly, the RAN device receives the N2 PDU session establishment request message from the AMF network element.

S1314: Establish a specific resource between the RAN device and the UE.

S1315: The RAN device sends an N2 PDU session establishment response message to the AMF network element. Correspondingly, the AMF network element receives the N2 PDU session establishment response message from the RAN device.

S1316: The AMF network element sends a session management context update request message to the SMF network element. Correspondingly, the SMF network element receives the session management context update request message from the AMF network element.

S1317: The SMF network element sends an N4 session modification request message to the UPF network element. Correspondingly, the UPF network element receives the N4 session modification request message from the SMF network element.

S1318: The UPF network element sends an N4 session modification response message to the SMF network element. Correspondingly, the SMF network element receives the N4 session modification response message from the UPF network element.

S1319: The SMF network element sends a session management context update response message to the AMF network element. Correspondingly, the AMF network element receives the session management context update response message from the SMF network element.

S1320: The SMF network element registers IPsec connection endpoint information with the UDM network element.

For a specific implementation principle of S1308, refer to related descriptions in S1108. For specific implementation principles of S1310 and S1311, refer to related descriptions in S708 and S709 and S1110 and S1111. For specific implementation principles of S1312 and S1313, refer to related descriptions in S1012 and S1013. For a specific implementation principle of S1314, refer to related descriptions in S1114. For specific implementation principles of S1315 to S1319, refer to related descriptions in S713 to S717. For a specific implementation principle of S1320, refer to related descriptions in S1020. Details are not described again.

### Scenario 5:

For example, in Scenario 5, an SMF network element may trigger a user plane security function to establish an IPsec connection to UE. This reduces a risk of user plane data exposure, reduces overheads of a RAN device, and improves a service life. The user plane security function may be deployed on a network element other than a UPF network element, for example, an SGW or a security network element, or any other possible network element. This is not specifically limited herein.

Specifically, Scenario 5 may be combined with Scenario 1 to Scenario 4. However, a difference is that S1007, S1107, S1207, and S1307 may be replaced with: The SMF network element selects a user plane security function that supports an IPsec connection, that is, a user plane security function that supports IPsec. For example, the SMF network element may determine, based on local configuration information, by interacting with an NRF network element or via a UDM network element, the user plane security function that supports the IPsec connection. The SMF network element may select the UPF network element in an existing manner, as shown in S707. Details are not described again. In addition, a difference from Scenario 1 to Scenario 4 is that an address of the UPF network element in the IPsec connection endpoint information may be replaced with an address of the user plane security function, that is, the SMF network element sends the address of the user plane security function to the UE. The SMF network element may further send configuration information to the user plane security function. For example, the configuration information includes an address of a PDU session of the UE and an IP address or an FQDN of the UPF network element. Optionally, the SMF network element may further send a user plane security rule to the user plane security function. In this way, the user plane security function may establish the IPsec connection to the UE via the UPF network element, that is, establish an IPsec child SA.

In addition, the SMF network element may further send indication information such as a packet detection rule (packet detection rule, PDR) and a forwarding action rule (forwarding action rule, FAR) to the UPF network element, to indicate the UPF network element to forward encrypted downlink user plane data from the user plane security function to the UE, forward unencrypted uplink user plane data from the user plane security function to a DN, forward encrypted uplink user plane data from the UE to the user plane security function, or forward unencrypted downlink user plane data from a DN to the user plane security function.

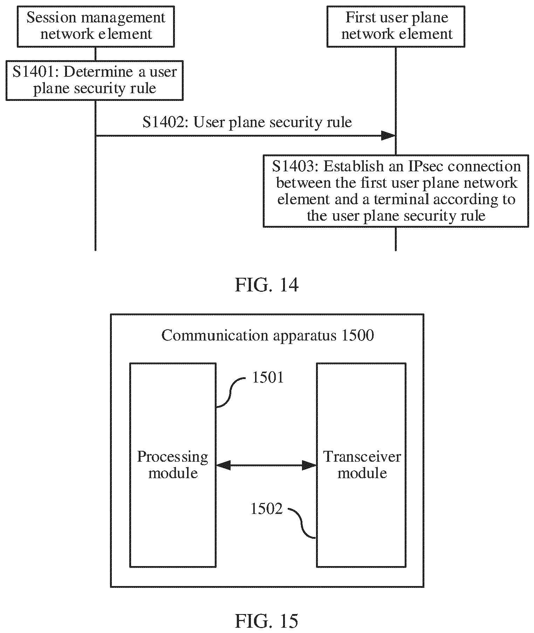

Procedures of the communication method in various scenarios according to embodiments of this application are described in detail with reference to FIG. 10A and FIG. 10B to FIG. 13A and FIG. 13B. The following describes an overall procedure of the communication method with reference to FIG. 14.

For example, FIG. 14 is a fifth schematic flowchart of a communication method according to an embodiment of this application. The communication method is applicable to the foregoing communication system, and is used to implement communication between a session management network element, a first user plane network element, and a terminal. The session management network element may be the foregoing SMF network element, the first user plane network element may be the foregoing UPF network element #1, and the terminal may be the foregoing UE. As shown in FIG. 14, a procedure of the communication method is shown in the following.

S1401: The session management network element determines a user plane security rule.

The user plane security rule is used to establish an IPsec connection between the first user plane network element and the terminal. The IPsec connection may be a secure connection established according to an IPsec protocol, in other words, an IPsec child security association SA established between the first user plane network element and the terminal.

The user plane security rule may include identification information. The identification information identifies the user plane security rule, to avoid an IPsec connection establishment failure caused because the session management network element cannot identify the user plane security rule. Optionally, the user plane security rule may be carried in an N4 session establishment request message (refer to S1402), and the identification information includes at least one of the following: an N4 session identifier or a user plane security rule identifier.

Optionally, the user plane security rule may further include at least one of the following: a security protocol, encryption indication information, or integrity protection indication information, the security protocol indicates a security protocol used by the IPsec connection, the encryption indication information indicates whether encryption is performed for the IPsec connection, and the integrity protection indication information indicates whether integrity protection is performed for the IPsec connection. For example, the security protocol includes at least one of the following: an encapsulating security payload ESP protocol or an authentication header AH protocol.

Optionally, the user plane security rule may further include an encapsulation mode. The encapsulation mode indicates an encapsulation mode of a data packet on the IPsec connection. For example, the encapsulation mode includes any one of the following: a tunnel mode or a transport mode.

In a possible design solution, the session management network element may obtain a radio access technology type of the terminal from a mobility management network element (for example, refer to S 1003). The session management network element may determine the user plane security rule based on the radio access technology type of the terminal. In other words, for terminals of different radio access technology types, the session management network element may choose to provide or not to provide the user plane security rule, to implement differentiated services and match requirements of the terminals. For example, the session management network element determines the user plane security rule when the radio access technology type is a new radio satellite access type. In other words, in a scenario in which an access network device is deployed on a satellite, the user plane security rule may be provided, to establish the IPsec connection between the first user plane network element and the terminal. This reduces load of the satellite and improves a service life.

Alternatively, the session management network element may determine the user plane security rule based on a radio access technology type of the terminal and a user plane security policy of the terminal. In other words, for terminals of different radio access technology types, the session management network element may choose, according to the user plane security policy, to provide or not to provide the user plane security rule, to implement differentiated services and match requirements of the terminals. For example, the session management network element determines the user plane security rule when the radio access technology type is a satellite access type and the user plane security policy of the terminal is that user plane security protection is determined to be enabled. In other words, in a scenario in which an access network device is deployed on a satellite, when the user plane security protection is needed for a session, the user plane security rule may be provided, to establish the IPsec connection between the first user plane network element and the terminal. This reduces load of the satellite and improves a service life.

In another possible design solution, the session management network element may alternatively determine the user plane security rule based on security indication information. The security indication information indicates to use the IPsec connection to protect user plane data. In other words, the session management network element may choose, based on a type of the indication information, to provide or not to provide the user plane security rule. For example, the session management network element may choose, based on the security indication information, to provide the user plane security rule, or choose, based on another type of indication information, not to provide the user plane security rule, to implement differentiated services and match requirements of terminals.

Alternatively, the session management network element may determine the user plane security rule based on security indication information and a user plane security policy of the terminal. In other words, the session management network element may choose, based on a type of the indication information and a user plane security requirement of the terminal, to provide or not to provide the user plane security rule, to implement differentiated services and match requirements of terminals. For example, the session management network element determines the user plane security rule when the security indication information indicates to use the IPsec connection to protect user plane data and the user plane security policy of the terminal is that user plane security protection is determined to be enabled, to provide the user plane security rule as needed. This avoids a waste of resources.

Optionally, the security indication information is end to end E2E security indication information, that is, existing information is reused, to reduce implementation difficulty. Optionally, the session management network element may obtain the security indication information from a data management network element (for example, a UDM network element). For example, the security indication information may be carried in subscription information of the terminal. In this way, the session management network element may obtain the security indication information by reusing a procedure of obtaining the subscription information of the terminal, to improve communication efficiency. Alternatively, the security indication information is preconfigured in the session management network element, and the session management network element may obtain the security indication information from local storage. In this way, no interaction between network elements is needed, thereby avoiding signaling exchange overheads.

In this embodiment of this application, the first user plane network element is a user plane network element that supports establishment of an IPsec connection to the terminal.

The session management network element may send a network function NF discovery request message to a network function network element (for example, an NRF network element), and receive an NF discovery response message from the network function network element. The NF discovery request message indicates the network function network element to provide a candidate user plane network element, and the candidate user plane network element supports establishment of an IPsec connection to the terminal. The NF discovery response message includes identification information of the candidate user plane network element. In this way, the session management network element determines the first user plane network element from the candidate user plane network element.

Alternatively, the session management network element may send an NF discovery request message to a network function network element, and receives an NF discovery response message from the network function network element. The NF discovery request message indicates the network function network element to provide a candidate user plane network element. The NF discovery response message includes identification information of the candidate user plane network element and information indicating whether the candidate user plane network element supports establishment of an IPsec connection to the terminal. In this way, the session management network element determines the first user plane network element from the candidate user plane network element.

Alternatively, the session management network element may further determine the first user plane network element from a locally stored user plane network element that supports establishment of an IPsec connection to the terminal.

Alternatively, the session management network element may further obtain IPsec connection endpoint information from the data management network element (UDM network element). The IPsec connection endpoint information indicates that an endpoint device on the IPsec connection is the first user plane network element. In this way, the session management network element may choose, based on the IPsec connection endpoint information, to reuse the first user plane network element to establish the IPsec connection. This reduces complexity and implementation difficulty.

In addition, for a specific implementation principle of S1401, refer to related descriptions in S1001 to S1008, S1101 to S1108, and S1201 to S1208. Details are not described again.

S1402: The session management network element sends the user plane security rule to the first user plane network element. Correspondingly, the first user plane network element receives the user plane security rule from the session management network element.

The user plane security rule may be carried in the N4 session establishment request message. For a specific implementation principle of S1402, refer to related descriptions in S1008 to S1011, S1108 to S1111, and S1208 to S1211. Details are not described again.

S1403: The first user plane network element establishes the IPsec connection between the first user plane network element and the terminal according to the user plane security rule.

The first user plane network element may send a security association SA establishment request message to the terminal according to the user plane security rule, and receive a SA establishment response message from the terminal. The SA establishment request message may include a SA parameter of the first user plane network element, and the SA establishment response message may include a SA parameter of the terminal. In other words, the first user plane network element and the terminal may exchange respective SA parameters, to implement SA parameter alignment, and ensure that the IPsec connection is successfully established. In addition, for a specific implementation principle of S1403, refer to related descriptions in S 1012 to S1014, S 1112 to S1114, and S1212 to S1214. Details are not described again.

In conclusion, according to the method shown in FIG. 10A and FIG. 10B to FIG. 14, it may be learned that, after the IPsec connection is established between the first user plane network element and the terminal, the terminal or the first user plane network element may be used as an endpoint device on the IPsec connection. In this case, when transmission of user plane data protected by IPsec is performed between endpoint devices, an intermediate transmission device (for example, an access network device) located between the endpoint devices, that is, an access network device on the IPsec connection, may directly perform transparent transmission of the user plane data. This reduces a risk of user plane data exposure.

Optionally, in a possible design solution, in the communication method according to this embodiment of this application, the access network device on the IPsec connection does not enable the user plane security protection of the terminal. For example, the session management network element sends the user plane security policy to the access network device. The user plane security policy indicates the access network device not to enable user plane encryption and integrity protection of the terminal. In this way, load of the access network device can be reduced, and available resources can be increased. In addition, for a specific implementation principle of the design solution, refer to related descriptions in S1012, S1112, and S1212. Details are not described again.

Optionally, in a possible design solution, in the communication method according to this embodiment of this application, the session management network element may send security endpoint information to the terminal, where the security endpoint information indicates that a security endpoint is the first user plane network element. This avoids an IPsec connection failure caused because the terminal does not know that the IPsec connection needs to be established to the first user plane network element. On this basis, after receiving the security endpoint information from the session management network element, the terminal may also actively establish the IPsec connection between the terminal and the security endpoint. For example, the terminal sends the SA establishment request message to the security endpoint, and receives the SA establishment response message from the security endpoint. The SA establishment request message includes the SA parameter of the terminal, and the SA establishment response message includes the SA parameter of the first user plane network element. In addition, for a specific implementation principle of the design solution, refer to related descriptions in S 1012 to S1014, S 1112 to S1114, and S1212 to S1214. Details are not described again.

Optionally, in a possible design solution, in the communication method according to this embodiment of this application, the terminal may send security capability information of the terminal to the mobility management network element. In this way, the session management network element may receive the security capability information of the terminal from the mobility management network element. The security capability information indicates that the terminal supports establishment of an IPsec connection to a core network function. In this way, the session management network element may establish the IPsec connection only for the terminal that supports the establishment of the IPsec connection to the core network function, to avoid a waste of resources. In addition, for a specific implementation principle of the design solution, refer to related descriptions in S1001 to S1003, S1101 to S1103, and S1201 to S1203. Details are not described again.

Optionally, in a possible design solution, in the communication method according to this embodiment of this application, the session management network element may further send the IPsec connection endpoint information to the data management network element. The IPsec connection endpoint information indicates that the endpoint device on the IPsec connection is the first user plane network element, so that the first user plane network element may be reused subsequently to establish the IPsec connection. This reduces the complexity and the implementation difficulty. In addition, for a specific implementation principle of the design solution, refer to related descriptions in S 1020, S 1120, S 1220, and S 1320. Details are not described again.

In this embodiment of this application, the core network function that establishes the IPsec connection to the terminal may alternatively be a security network element (refer to Scenario 5). In other words, the session management network element determines a user plane security rule, and sends the user plane security rule to the security network element. The user plane security rule is used to establish an IPsec connection between the security network element and the terminal. Correspondingly, the security network element receives the user plane security rule sent by the session management network element, to establish the IPsec connection between the security network element and the terminal according to the user plane security rule. For example, the security network element sends a security association SA establishment request message to the terminal according to the user plane security rule via a user plane network element, to receive a SA establishment response message from the terminal via the user plane network element. The SA establishment request message includes a SA parameter of the security network element, and the SA establishment response message includes a SA parameter of the terminal.

In this case, the session management network element may further send first information to the user plane network element, where the first information indicates at least one of the following: that the user plane network element sends data from the terminal or a data network to the security network element, or that the user plane network element sends data from the security network element to the terminal or a data network, to ensure that user plane data can be normally exchanged between the security network element and the terminal.

It may be understood that, after the IPsec connection is established between the security network element and the terminal, the terminal or the security network element may be used as an endpoint device on the IPsec connection. In this case, when transmission of user plane data protected by IPsec is performed between endpoint devices, an intermediate transmission device (for example, an access network device) located between the endpoint devices, that is, an access network device on the IPsec connection, may still directly perform transparent transmission of the user plane data. This reduces a risk of user plane data exposure.

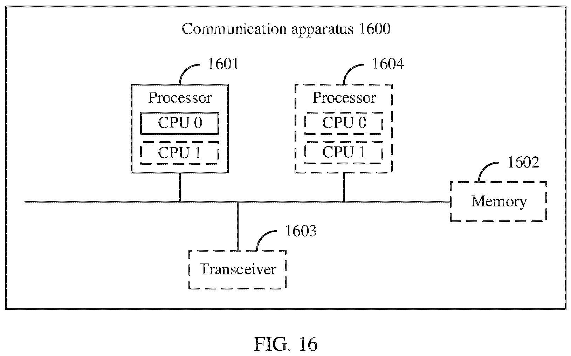

The communication method according to embodiments of this application is described in detail with reference to FIG. 10A and FIG. 10B to FIG. 14. Communication apparatuses configured to perform the communication method according to embodiments of this application are described below in detail with reference to FIG. 15 and FIG. 16.

For example, FIG. 15 is a first diagram of a structure of a communication apparatus according to an embodiment of this application. As shown in FIG. 15, the communication apparatus 1500 includes a processing module 1501 and a transceiver module 1502. For ease of description, FIG. 15 shows only main components of the communication apparatus.

In some embodiments, the communication apparatus 1500 is applicable to the communication system shown in FIG. 8, and performs a function of the SMF network element in the communication method shown in FIG. 10A and FIG. 10B to FIG. 13A and FIG. 13B, or is applicable to the communication system shown in FIG. 8, and performs a function of the session management network element in the communication method shown in FIG. 14.

The processing module 1501 is configured to determine a user plane security rule. The transceiver module 1502 is configured to send the user plane security rule to a first user plane network element. The user plane security rule is used to establish an internet protocol security IPsec connection between the first user plane network element and a terminal.

The IPsec connection may be a secure connection established according to an IPsec protocol, in other words, an IPsec child security association SA established between the first user plane network element and the terminal.

In a possible design solution, an access network device on the IPsec connection does not enable user plane security protection of the terminal.

In a possible design solution, the processing module 1501 is further configured to determine the user plane security rule based on a radio access technology type of the terminal.

Optionally, the processing module 1501 is further configured to determine the user plane security rule when the radio access technology type is a satellite access type.

In a possible design solution, the processing module 1501 is further configured to determine the user plane security rule based on a radio access technology type of the terminal and a user plane security policy of the terminal.

Optionally, the processing module 1501 is further configured to determine the user plane security rule when the radio access technology type is a satellite access type and the user plane security policy of the terminal is that the user plane security protection is determined to be enabled.

In a possible design solution, the processing module 1501 is further configured to determine the user plane security rule based on security indication information. The security indication information indicates to use the IPsec connection to protect user plane data.

In a possible design solution, the processing module 1501 is further configured to determine the user plane security rule based on security indication information and a user plane security policy of the terminal.

Optionally, the processing module 1501 is further configured to determine the user plane security rule when the security indication information indicates to use the IPsec connection to protect user plane data and the user plane security policy of the terminal is that the user plane security protection is determined to be enabled.

Optionally, the security indication information is end to end E2E security indication information.

Optionally, the transceiver module 1502 is further configured to obtain the security indication information from a network function network element. For example, the security indication information may be carried in subscription information of the terminal.

In a possible design solution, the user plane security rule includes identification information. The identification information identifies the user plane security rule.

Optionally, the user plane security rule is carried in an N4 session establishment request message, and the identification information includes at least one of the following: an N4 session identifier or a user plane security rule identifier. The N4 session identifier may identify that the user plane security rule is a user plane security rule of an N4 session.

Optionally, the user plane security rule includes at least one of the following: a security protocol, encryption indication information, or integrity protection indication information, the security protocol indicates a security protocol used by the IPsec connection, the encryption indication information indicates whether encryption is performed for the IPsec connection, and the integrity protection indication information indicates whether integrity protection is performed for the IPsec connection. For example, the security protocol includes at least one of the following: an encapsulating security payload ESP protocol or an authentication header AH protocol.

Optionally, the user plane security rule includes an encapsulation mode. The encapsulation mode indicates an encapsulation mode of a data packet on the IPsec connection. For example, the encapsulation mode includes any one of the following: a tunnel mode or a transport mode.

In a possible design solution, the transceiver module 1502 is further configured to: send a network function NF discovery request message to the network function network element, and receive an NF discovery response message from the network function network element. The NF discovery request message indicates the network function network element to provide a candidate user plane network element, and the candidate user plane network element supports establishment of an IPsec connection to the terminal. The NF discovery response message includes identification information of the candidate user plane network element. In this way, the processing module 1501 is further configured to determine the first user plane network element from the candidate user plane network element.

In a possible design solution, the transceiver module 1502 is further configured to: send an NF discovery request message to the network function network element, and receive an NF discovery response message from the network function network element. The NF discovery request message indicates the network function network element to provide a candidate user plane network element. The NF discovery response message includes identification information of the candidate user plane network element and information indicating whether the candidate user plane network element supports establishment of an IPsec connection to the terminal. In this way, the processing module 1501 is further configured to determine the first user plane network element from the candidate user plane network element.

In a possible design solution, the processing module 1501 is further configured to determine the first user plane network element from a locally stored user plane network element that supports establishment of an IPsec connection to the terminal.

In a possible design solution, the transceiver module 1502 is further configured to obtain IPsec connection endpoint information from a data management network element. The IPsec connection endpoint information indicates that an endpoint device on the IPsec connection is the first user plane network element.

In a possible design solution, the transceiver module 1502 is further configured to send IPsec connection endpoint information to a data management network element. The IPsec connection endpoint information indicates that an endpoint device on the IPsec connection is the first user plane network element.

In a possible design solution, the transceiver module 1502 is further configured to send security endpoint information to the terminal, where the security endpoint information indicates that a security endpoint is the first user plane network element.

In a possible design solution, the transceiver module 1502 is further configured to receive security capability information of the terminal from a mobility management network element. The security capability information indicates that the terminal supports establishment of an IPsec connection to a core network function.

Optionally, the transceiver module 1502 may include a receiving module and a sending module (not shown in FIG. 15). The sending module is configured to implement a sending function of the communication apparatus 1500, and the receiving module is configured to implement a receiving function of the communication apparatus 1500.

Optionally, the communication apparatus 1500 may further include a storage module (not shown in FIG. 15), and the storage module stores a program or instructions. When the processing module 1501 executes the program or the instructions, the communication apparatus 1500 may perform the function of the SMF network element in the communication method shown in any one of FIG. 10A and FIG. 10B to FIG. 13A and FIG. 13B, or perform the function of the session management network element in the communication method shown in any one of FIG. 14.

It should be understood that the processing module 1501 in the communication apparatus 1500 may be implemented by a processor or a processor-related circuit component, and may be a processor or a processing unit. The transceiver module 1502 may be implemented by a transceiver or a transceiver-related circuit component, and may be a transceiver or a transceiver unit.

It should be noted that the communication apparatus 1500 may be a network device, may be a chip (system) or another part or component that may be disposed in a network device, or may be an apparatus including a network device. This is not limited in this application.

In addition, for technical effects of the communication apparatus 1500, refer to the technical effects of the communication method shown in any one of FIG. 10A and FIG. 10B to FIG. 14. Details are not described herein again.

In some other embodiments, the communication apparatus 1500 is applicable to the communication system shown in FIG. 8, and performs a function of the UPF network element #1 in the communication method shown in FIG. 10A and FIG. 10B or FIG. 12A and FIG. 12B, is applicable to the communication system shown in FIG. 8, and performs a function of the UPF network element #1/UPF network element #3 in the communication method shown in FIG. 11A and FIG. 11B or FIG. 13A and FIG. 13B, or is applicable to the communication system shown in FIG. 8, and performs a function of the first user plane network element in the communication method shown in FIG. 14.

The transceiver module 1502 is configured to receive a user plane security rule from a session management network element. The processing module 1501 is configured to establish an IPsec connection between the communication apparatus 1500 and a terminal according to the user plane security rule.

In a possible design solution, an access network device on the IPsec connection does not enable user plane security protection of the terminal.

In a possible design solution, the processing module 1501 is configured to control, according to the user plane security rule, the transceiver module 1502 to send a security association SA establishment request message to the terminal, and receive a SA establishment response message from the terminal. The SA establishment request message may include a SA parameter of the communication apparatus 1500, and the SA establishment response message may include a SA parameter of the terminal.

In a possible design solution, the user plane security rule includes identification information. The identification information identifies the user plane security rule.

Optionally, the user plane security rule is carried in an N4 session establishment request message. The identification information includes at least one of the following: an N4 session identifier or a user plane security rule identifier.

Optionally, the user plane security rule includes at least one of the following: a security protocol, encryption indication information, or integrity protection indication information. The security protocol indicates a security protocol used by the IPsec connection, the encryption indication information indicates whether encryption is performed for the IPsec connection, and the integrity protection indication information indicates whether integrity protection is performed for the IPsec connection.

Further, the security protocol includes at least one of the following: an ESP protocol or an AH protocol.

Optionally, the user plane security rule includes an encapsulation mode. The encapsulation mode indicates an encapsulation mode of a data packet on the IPsec connection.

Further, the encapsulation mode includes any one of the following: a tunnel mode or a transport mode.

Optionally, the transceiver module 1502 may include a receiving module and a sending module (not shown in FIG. 15). The sending module is configured to implement a sending function of the communication apparatus 1500, and the receiving module is configured to implement a receiving function of the communication apparatus 1500.

Optionally, the communication apparatus 1500 may further include a storage module (not shown in FIG. 15), and the storage module stores a program or instructions. When the processing module 1501 executes the program or the instructions, the communication apparatus 1500 may perform the function of the UPF network element #1 in the communication method shown in FIG. 10A and FIG. 10B or FIG. 12A and FIG. 12B, the function of the UPF network element #1/UPF network element #3 in the communication method shown in FIG. 11A and FIG. 11B or FIG. 13A and FIG. 13B, or the function of the first user plane network element in the communication method shown in FIG. 14.

It should be understood that the processing module 1501 in the communication apparatus 1500 may be implemented by a processor or a processor-related circuit component, and may be a processor or a processing unit. The transceiver module 1502 may be implemented by a transceiver or a transceiver-related circuit component, and may be a transceiver or a transceiver unit.

It should be noted that the communication apparatus 1500 may be a network device, may be a chip (system) or another part or component that may be disposed in a network device, or may be an apparatus including a network device. This is not limited in this application.

In addition, for technical effects of the communication apparatus 1500, refer to the technical effects of the communication method shown in any one of FIG. 10A and FIG. 10B to FIG. 14. Details are not described herein again.

In still some other embodiments, the communication apparatus 1500 is applicable to the communication system shown in FIG. 8, and performs a function of the UE in the communication method shown in FIG. 10A and FIG. 10B to FIG. 13A and FIG. 13B, or is applicable to the communication system shown in FIG. 8, and performs a function of the terminal in the communication method shown in FIG. 14.

The transceiver module 1502 is configured to receive security endpoint information from a session management network element. The processing module 1501 is configured to establish an IPsec connection between the communication apparatus 1500 and a security endpoint indicated by the security endpoint information. The security endpoint is a first user plane network element.

In a possible design solution, the transceiver module 1502 is further configured to: send a SA establishment request message to the security endpoint, and receive a SA establishment response message from the security endpoint. The SA establishment request message includes a SA parameter of the communication apparatus 1500, and the SA establishment response message includes a SA parameter of the first user plane network element.

In a possible design solution, the transceiver module 1502 is further configured to send security capability information of the communication apparatus 1500 to a mobility management network element. The security capability information indicates that the communication apparatus 1500 supports establishment of an IPsec connection to a core network function.

Optionally, the transceiver module 1502 may include a receiving module and a sending module (not shown in FIG. 15). The sending module is configured to implement a sending function of the communication apparatus 1500, and the receiving module is configured to implement a receiving function of the communication apparatus 1500.

Optionally, the communication apparatus 1500 may further include a storage module (not shown in FIG. 15), and the storage module stores a program or instructions. When the processing module 1501 executes the program or the instructions, the communication apparatus 1500 may perform the function of the UE in the communication method shown in FIG. 10A and FIG. 10B to FIG. 13A and FIG. 13B, or perform the function of the terminal in the communication method shown in FIG. 14.

It should be understood that the processing module 1501 in the communication apparatus 1500 may be implemented by a processor or a processor-related circuit component, and may be a processor or a processing unit. The transceiver module 1502 may be implemented by a transceiver or a transceiver-related circuit component, and may be a transceiver or a transceiver unit.

It should be noted that the communication apparatus 1500 may be a terminal, may be a chip (system) or another part or component that may be disposed in a terminal, or may be an apparatus including a terminal. This is not limited in this application.

In addition, for technical effects of the communication apparatus 1500, refer to the technical effects of the communication method shown in any one of FIG. 10A and FIG. 10B to FIG. 14. Details are not described herein again.

In yet some other embodiments, the communication apparatus 1500 is applicable to the communication system shown in FIG. 8, and performs a function of the SMF network element/session management network element in Scenario 5.

The processing module 1501 is configured to determine a user plane security rule. The transceiver module 1502 is configured to send the user plane security rule to a security network element. The user plane security rule is used to establish an IPsec connection between the security network element and a terminal.

In a possible design solution, an access network device on the IPsec connection does not enable user plane security protection of the terminal.

In a possible design solution, the user plane security rule includes identification information. The identification information identifies the user plane security rule.

Optionally, the user plane security rule is carried in an N4 session establishment request message, and the identification information includes at least one of the following: an N4 session identifier or a user plane security rule identifier.

Optionally, the user plane security rule includes at least one of the following: a security protocol, encryption indication information, or integrity protection indication information. The security protocol indicates a security protocol used by the IPsec connection, the encryption indication information indicates whether encryption is performed for the IPsec connection, and the integrity protection indication information indicates whether integrity protection is performed for the IPsec connection.

Further, the security protocol includes at least one of the following: an encapsulating security payload ESP protocol or an authentication header AH protocol.

Optionally, the user plane security rule includes an encapsulation mode. The encapsulation mode indicates an encapsulation mode of a data packet on the IPsec connection.

Further, the encapsulation mode includes any one of the following: a tunnel mode or a transport mode.

In a possible design solution, the transceiver module 1502 is further configured to send first information to a user plane network element, where the first information indicates at least one of the following: that the user plane network element sends data from the terminal or a data network to the security network element, or that the user plane network element sends data from the security network element to the terminal or a data network.

In a possible design solution, the transceiver module 1502 is further configured to receive security capability information of the terminal from a mobility management network element. The security capability information indicates that the terminal supports establishment of an IPsec connection to a core network function.

Optionally, the transceiver module 1502 may include a receiving module and a sending module (not shown in FIG. 15). The sending module is configured to implement a sending function of the communication apparatus 1500, and the receiving module is configured to implement a receiving function of the communication apparatus 1500.

Optionally, the communication apparatus 1500 may further include a storage module (not shown in FIG. 15), and the storage module stores a program or instructions. When the processing module 1501 executes the program or the instructions, the communication apparatus 1500 may perform the function of the SMF network element/session management network element in Scenario 5.

It should be understood that the processing module 1501 in the communication apparatus 1500 may be implemented by a processor or a processor-related circuit component, and may be a processor or a processing unit. The transceiver module 1502 may be implemented by a transceiver or a transceiver-related circuit component, and may be a transceiver or a transceiver unit.

It should be noted that the communication apparatus 1500 may be a network device, may be a chip (system) or another part or component that may be disposed in a network device, or may be an apparatus including a network device. This is not limited in this application.

In addition, for technical effects of the communication apparatus 1500, refer to the technical effects of the communication method shown in any one of FIG. 10A and FIG. 10B to FIG. 14. Details are not described herein again.

In still yet some other embodiments, the communication apparatus 1500 is applicable to the communication system shown in FIG. 8, and performs a function of the SGW/security network element in Scenario 5.

The transceiver module 1502 is configured to receive a user plane security rule sent by a session management network element. The processing module 1501 is configured to establish an IPsec connection between the communication apparatus 1500 and a terminal according to the user plane security rule.

In a possible design solution, an access network device on the IPsec connection does not enable user plane security protection of the terminal.

In a possible design solution, the user plane security rule includes identification information. The identification information identifies the user plane security rule.

Optionally, the user plane security rule is carried in an N4 session establishment request message, and the identification information includes at least one of the following: an N4 session identifier or a user plane security rule identifier.

Optionally, the user plane security rule includes at least one of the following: a security protocol, encryption indication information, or integrity protection indication information. The security protocol indicates a security protocol used by the IPsec connection, the encryption indication information indicates whether encryption is performed for the IPsec connection, and the integrity protection indication information indicates whether integrity protection is performed for the IPsec connection.

Further, the security protocol includes at least one of the following: an encapsulating security payload ESP protocol or an authentication header AH protocol.

Optionally, the user plane security rule includes an encapsulation mode. The encapsulation mode indicates an encapsulation mode of a data packet on the IPsec connection.

Further, the encapsulation mode includes any one of the following: a tunnel mode or a transport mode.

In a possible design solution, the processing module 1501 is further configured to control, according to the user plane security rule, the transceiver module 1502 to send a security association SA establishment request message to the terminal via a user plane network element, and receive a SA establishment response message from the terminal via the user plane network element. The SA establishment request message includes a SA parameter of the communication apparatus 1500, and the SA establishment response message includes a SA parameter of the terminal.

Optionally, the transceiver module 1502 may include a receiving module and a sending module (not shown in FIG. 15). The sending module is configured to implement a sending function of the communication apparatus 1500, and the receiving module is configured to implement a receiving function of the communication apparatus 1500.

Optionally, the communication apparatus 1500 may further include a storage module (not shown in FIG. 15), and the storage module stores a program or instructions. When the processing module 1501 executes the program or the instructions, the communication apparatus 1500 may perform the function of the SGW/security network element in Scenario 5.

It should be understood that the processing module 1501 in the communication apparatus 1500 may be implemented by a processor or a processor-related circuit component, and may be a processor or a processing unit. The transceiver module 1502 may be implemented by a transceiver or a transceiver-related circuit component, and may be a transceiver or a transceiver unit.

It should be noted that the communication apparatus 1500 may be a network device, may be a chip (system) or another part or component that may be disposed in a network device, or may be an apparatus including a network device. This is not limited in this application.

In addition, for technical effects of the communication apparatus 1500, refer to the technical effects of the communication method shown in any one of FIG. 10A and FIG. 10B to FIG. 14. Details are not described herein again.

For example, FIG. 16 is a second diagram of a structure of a communication apparatus according to an embodiment of this application. The communication apparatus may be a terminal or a network device, or may be a chip (system) or another part or component that may be disposed in a terminal or a network device. As shown in FIG. 16, the communication apparatus 1600 may include a processor 1601. Optionally, the communication apparatus 1600 may further include a memory 1602 and/or a transceiver 1603. The processor 1601 is coupled to the memory 1602 and the transceiver 1603, for example, may be connected to the memory 1602 and the transceiver 1603 through a communication bus.

Various components of the communication apparatus 1600 are described specifically with reference to FIG. 16.

The processor 1601 is a control center of the communication apparatus 1600, and may be one processor, or may be a collective name of a plurality of processing elements. For example, the processor 1601 is one or more central processing units (central processing units, CPUs), may be an application-specific integrated circuit (application-specific integrated circuit, ASIC), or may be one or more integrated circuits configured to implement embodiments of this application, for example, one or more microprocessors (digital signal processors, DSPs), or one or more field programmable gate arrays (field programmable gate arrays, FPGAs).

Optionally, the processor 1601 may perform various functions of the communication method by running or executing a software program stored in the memory 1602 and invoking data stored in the memory 1602.

During specific implementation, in an embodiment, the processor 1601 may include one or more CPUs, for example, a CPU 0 and a CPU 1 shown in FIG. 16.

In specific implementation, in an embodiment, the communication apparatus 1600 may alternatively include a plurality of processors, for example, the processor 1601 and a processor 1604 in FIG. 16. Each of the processors may be a single-core processor (single-CPU) or may be a multi-core processor (multi-CPU). The processor herein may be one or more devices, circuits, and/or processing cores configured to process data (for example, computer program instructions).

The memory 1602 is configured to store a software program for performing the solutions in this application, and the processor 1601 controls execution of the software program. For a specific implementation, refer to the foregoing method embodiments. Details are not described herein again.

Optionally, the memory 1602 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that can be accessed by a computer. However, this is not limited thereto. The memory 1602 may be integrated with the processor 1601, or may exist independently, and is coupled to the processor 1601 through an interface circuit (not shown in FIG. 16) of the communication apparatus 1600. This is not specifically limited in this embodiment of this application.

The transceiver 1603 is configured to communicate with another communication apparatus. For example, the communication apparatus 1600 is a terminal device, and the transceiver 1603 may be configured to communicate with a network device or communicate with another terminal device. For another example, the communication apparatus 1600 is a network device, and the transceiver 1603 may be configured to communicate with a terminal device or communicate with another network device.

Optionally, the transceiver 1603 may include a receiver and a transmitter (not separately shown in FIG. 16). The receiver is configured to implement a receiving function, and the transmitter is configured to implement a sending function.

Optionally, the transceiver 1603 may be integrated with the processor 1601, or may exist independently, and is coupled to the processor 1601 through an interface circuit (not shown in FIG. 16) of the communication apparatus 1600. This is not specifically limited in this embodiment of this application.

It should be noted that a structure of the communication apparatus 1600 shown in FIG. 16 does not constitute a limitation on the communication apparatus. An actual communication apparatus may include more or fewer components than those shown in the figure, combine some components, or have different component arrangements.

In addition, for technical effects of the communication apparatus 1600, refer to the technical effects of the communication method in the foregoing method embodiments. Details are not described herein again.

An embodiment of this application provides a communication system. The communication system includes one or more terminals and one or more network devices described above.

It should be understood that, the processor in embodiments of this application may be a central processing unit (central processing unit, CPU), or the processor may be another generalpurpose processor, a digital signal processor (digital signal processor, DSP), an application-specific integrated circuit (application-specific integrated circuit, ASIC), a field programmable gate array (field programmable gate array, FPGA) or another programmable logic component, a discrete gate or transistor logic device, a discrete hardware component, or the like. The generalpurpose processor may be a microprocessor, or the processor may be any conventional processor or the like.

It should be further understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitation, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (for example, a circuit), firmware, or any combination thereof. When the software is used to implement embodiments, the foregoing embodiments may be implemented completely or partially in a form of a computer program product. The computer program product includes one or more computer instructions or computer programs. When the computer instructions or the computer programs are loaded and executed on a computer, procedures or functions according to embodiments of this application are all or partially generated. The computer may be a generalpurpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually indicates an "or" relationship between associated objects, but may also indicate an "and/or" relationship. For details, refer to the context for understanding.

In this application, "at least one" means one or more, and "a plurality of" means two or more. "At least one of the following items (pieces)" or a similar expression thereof refers to any combination of these items, including any combination of a singular item (piece) or plural items (pieces). For example, at least one item (piece) of a, b, or c may indicate: a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined based on functions and internal logic of the processes, and should not constitute any limitation on implementation processes of embodiments of this application.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for a purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in another manner. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions in this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
determining, by a session management network element, a user plane security rule, wherein the user plane security rule is used to establish an internet protocol security IPsec connection between a first user plane network element and a terminal; and
sending, by the session management network element, the user plane security rule to the first user plane network element.

2. The method according to claim 1, wherein an access network device on the IPsec connection does not enable user plane security protection of the terminal.

3. The method according to claim 2, wherein the method further comprises:
sending, by the session management network element, a user plane security policy to the access network device, wherein the user plane security policy indicates the access network device not to enable user plane encryption and integrity protection of the terminal.

4. The method according to any one of claims 1 to 3, wherein the determining, by a session management network element, a user plane security rule comprises:
determining, by the session management network element, the user plane security rule based on a radio access technology type of the terminal.

5. The method according to claim 4, wherein the determining, by the session management network element, the user plane security rule based on a radio access technology type of the terminal comprises:
determining, by the session management network element, the user plane security rule when the radio access technology type is a new radio satellite access type.

6. The method according to any one of claims 1 to 3, wherein the determining, by a session management network element, a user plane security rule comprises:
determining, by the session management network element, the user plane security rule based on a radio access technology type of the terminal and a user plane security policy of the terminal.

7. The method according to claim 6, wherein the determining, by the session management network element, the user plane security rule based on a radio access technology type of the terminal and a user plane security policy of the terminal comprises:
determining, by the session management network element, the user plane security rule when the radio access technology type is a satellite access type and the user plane security policy of the terminal is that the user plane security protection is determined to be enabled.

8. The method according to claim 1, wherein the determining, by a session management network element, a user plane security rule comprises:
determining, by the session management network element, the user plane security rule based on security indication information, wherein the security indication information indicates to use the IPsec connection to protect user plane data.

9. The method according to claim 1, wherein the determining, by a session management network element, a user plane security rule comprises:
determining, by the session management network element, the user plane security rule based on security indication information and a user plane security policy of the terminal.

10. The method according to claim 9, wherein the determining, by the session management network element, the user plane security rule based on security indication information and a user plane security policy of the terminal comprises:
determining, by the session management network element, the user plane security rule when the security indication information indicates to use the IPsec connection to protect user plane data and the user plane security policy of the terminal is that user plane security protection is determined to be enabled.

11. The method according to claim 9 or 10, wherein the security indication information is end to end E2E security indication information.

12. The method according to any one of claims 9 to 11, wherein the method further comprises:
obtaining, by the session management network element, the security indication information from a data management network element.

13. The method according to any one of claims 1 to 12, wherein the user plane security rule comprises identification information, and the identification information identifies the user plane security rule.

14. The method according to claim 13, wherein the user plane security rule is carried in an N4 session establishment request message, the identification information comprises at least one of the following: an N4 session identifier or a user plane security rule identifier, and the N4 session identifier identifies that the user plane security rule is a user plane security rule of an N4 session.

15. The method according to claim 12 or 13, wherein the user plane security rule comprises at least one of the following: a security protocol, encryption indication information, or integrity protection indication information, the security protocol indicates a security protocol used by the IPsec connection, the encryption indication information indicates whether encryption is performed for the IPsec connection, and the integrity protection indication information indicates whether integrity protection is performed for the IPsec connection.

16. The method according to any one of claims 13 to 15, wherein the user plane security rule comprises an encapsulation mode, and the encapsulation mode indicates an encapsulation mode of a data packet on the IPsec connection.

17. The method according to any one of claims 1 to 16, wherein the method further comprises:
sending, by the session management network element, a network function NF discovery request message to a network function network element, wherein the NF discovery request message indicates the network function network element to provide a candidate user plane network element, and the candidate user plane network element supports establishment of an IPsec connection to the terminal;
receiving, by the session management network element, an NF discovery response message from the network function network element, wherein the NF discovery response message comprises identification information of the candidate user plane network element; and
determining, by the session management network element, the first user plane network element from the candidate user plane network element.

18. The method according to any one of claims 1 to 16, wherein the method further comprises:
sending, by the session management network element, an NF discovery request message to a network function network element, wherein the NF discovery request message indicates the network function network element to provide a candidate user plane network element;
receiving, by the session management network element, an NF discovery response message from the network function network element, wherein the NF discovery response message comprises identification information of the candidate user plane network element and information indicating whether the candidate user plane network element supports establishment of an IPsec connection to the terminal; and
determining, by the session management network element, the first user plane network element from the candidate user plane network element.

19. The method according to any one of claims 1 to 16, wherein the method further comprises:
determining, by the session management network element, the first user plane network element from a locally stored user plane network element that supports establishment of an IPsec connection to the terminal.

20. The method according to any one of claims 1 to 19, wherein the method further comprises:
obtaining, by the session management network element, IPsec connection endpoint information from the data management network element, wherein the IPsec connection endpoint information indicates the first user plane network element on the IPsec connection.

21. The method according to any one of claims 1 to 19, wherein the method further comprises:
sending, by the session management network element, IPsec connection endpoint information to the data management network element, wherein the IPsec connection endpoint information indicates the first user plane network element on the IPsec connection.

22. The method according to any one of claims 1 to 21, wherein the method further comprises:
sending, by the session management network element, security endpoint information to the terminal, wherein the security endpoint information indicates that a security endpoint is the first user plane network element.

23. The method according to any one of claims 1 to 22, wherein the method further comprises:
receiving, by the session management network element, security capability information of the terminal from a mobility management network element, wherein the security capability information indicates that the terminal supports establishment of an IPsec connection to a core network function.

24. A communication method, wherein the method comprises:
receiving, by a first user plane network element, a user plane security rule from a session management network element; and
establishing, by the first user plane network element, an IPsec connection between the first user plane network element and a terminal according to the user plane security rule.

25. The method according to claim 24, wherein an access network device on the IPsec connection does not enable user plane security protection of the terminal.

26. The method according to claim 24 or 25, wherein the establishing, by the first user plane network element, an IPsec connection between the first user plane network element and a terminal according to the user plane security rule comprises:
sending, by the first user plane network element, a security association SA establishment request message to the terminal according to the user plane security rule, wherein the SA establishment request message comprises a SA parameter of the first user plane network element; and
receiving, by the first user plane network element, a SA establishment response message from the terminal, wherein the SA establishment response message comprises a SA parameter of the terminal.

27. The method according to any one of claims 24 to 26, wherein the user plane security rule comprises identification information, and the identification information identifies the user plane security rule.

28. The method according to claim 27, wherein the user plane security rule is carried in an N4 session establishment request message, and the identification information comprises at least one of the following: an N4 session identifier or a user plane security rule identifier.

29. The method according to claim 27, wherein the user plane security rule comprises at least one of the following: a security protocol, encryption indication information, or integrity protection indication information, the security protocol indicates a security protocol used by the IPsec connection, the encryption indication information indicates whether encryption is performed for the IPsec connection, and the integrity protection indication information indicates whether integrity protection is performed for the IPsec connection.

30. The method according to claim 29, wherein the security protocol comprises at least one of the following: an ESP protocol or an AH protocol.

31. The method according to any one of claims 27 to 30, wherein the user plane security rule comprises an encapsulation mode, and the encapsulation mode indicates an encapsulation mode of a data packet on the IPsec connection.

32. The method according to claim 31, wherein the encapsulation mode comprises any one of the following: a tunnel mode or a transport mode.

33. A communication method, wherein the method comprises:
receiving, by a terminal, security endpoint information from a session management network element; and
establishing, by the terminal, an IPsec connection between the terminal and a security endpoint indicated by the security endpoint information, wherein the security endpoint is a first user plane network element.

34. The method according to claim 33, wherein the establishing, by the terminal, an IPsec connection to a security endpoint indicated by the security endpoint information comprises:
sending, by the terminal, a SA establishment request message to the security endpoint, wherein the SA establishment request message comprises a SA parameter of the terminal; and
receiving, by the terminal, a SA establishment response message from the security endpoint, wherein the SA establishment response message comprises a SA parameter of the first user plane network element.

35. The method according to claim 33 or 34, wherein the method further comprises:
sending, by the terminal, security capability information of the terminal to a mobility management network element, wherein the security capability information of the terminal indicates that the terminal supports establishment of an IPsec connection to a core network function.

36. A communication method, wherein the method comprises:
determining, by a session management network element, a user plane security rule, wherein the user plane security rule is used to establish an IPsec connection between a security network element and a terminal; and
sending, by the session management network element, the user plane security rule to the security network element.

37. The method according to claim 36, wherein an access network device on the IPsec connection does not enable user plane security protection of the terminal.

38. The method according to claim 36 or 37, wherein the user plane security rule comprises identification information, and the identification information identifies the user plane security rule.

39. The method according to claim 38, wherein the user plane security rule is carried in an N4 session establishment request message, and the identification information comprises at least one of the following: an N4 session identifier or a user plane security rule identifier.

40. The method according to claim 38, wherein the user plane security rule comprises at least one of the following: a security protocol, encryption indication information, or integrity protection indication information, the security protocol indicates a security protocol used by the IPsec connection, the encryption indication information indicates whether encryption is performed for the IPsec connection, and the integrity protection indication information indicates whether integrity protection is performed for the IPsec connection.

41. The method according to claim 40, wherein the security protocol comprises at least one of the following: an encapsulating security payload ESP protocol or an authentication header AH protocol.

42. The method according to any one of claims 38 to 41, wherein the user plane security rule comprises an encapsulation mode, and the encapsulation mode indicates an encapsulation mode of a data packet on the IPsec connection.

43. The method according to claim 42, wherein the encapsulation mode comprises any one of the following: a tunnel mode or a transport mode.

44. The method according to any one of claims 36 to 43, wherein the method further comprises:
sending, by the session management network element, first information to a user plane network element, wherein the first information indicates at least one of the following: sending, by the user plane network element, data from the terminal or a data network to the security network element, or sending, by the user plane network element, data from the security network element to the terminal or a data network.

45. The method according to any one of claims 36 to 44, wherein the method further comprises:
receiving, by the session management network element, security capability information of the terminal from a mobility management network element, wherein the security capability information indicates that the terminal supports establishment of an IPsec connection to a core network function.

46. A communication method, wherein the method comprises:
receiving, by a security network element, a user plane security rule sent by a session management network element; and
establishing, by the security network element, an IPsec connection between the security network element and a terminal according to the user plane security rule.

47. The method according to claim 46, wherein an access network device on the IPsec connection does not enable user plane security protection of the terminal.

48. The method according to claim 46 or 47, wherein the user plane security rule comprises identification information, and the identification information identifies the user plane security rule.

49. The method according to claim 48, wherein the user plane security rule is carried in an N4 session establishment request message, and the identification information comprises at least one of the following: an N4 session identifier or a user plane security rule identifier.

50. The method according to claim 48, wherein the user plane security rule comprises at least one of the following: a security protocol, encryption indication information, or integrity protection indication information, the security protocol indicates a security protocol used by the IPsec connection, the encryption indication information indicates whether encryption is performed for the IPsec connection, and the integrity protection indication information indicates whether integrity protection is performed for the IPsec connection.

51. The method according to claim 50, wherein the security protocol comprises at least one of the following: an encapsulating security payload ESP protocol or an authentication header AH protocol.

52. The method according to any one of claims 48 to 51, wherein the user plane security rule comprises an encapsulation mode, and the encapsulation mode indicates an encapsulation mode of a data packet on the IPsec connection.

53. The method according to claim 52, wherein the encapsulation mode comprises any one of the following: a tunnel mode or a transport mode.

54. A communication apparatus, wherein the communication apparatus comprises a module configured to perform the method according to any one of claims 1 to 23.

55. A communication apparatus, wherein the communication apparatus comprises a module configured to perform the method according to any one of claims 24 to 32.

56. A communication apparatus, wherein the communication apparatus comprises a module configured to perform the method according to any one of claims 33 to 35.

57. A communication apparatus, wherein the communication apparatus comprises a module configured to perform the method according to any one of claims 36 to 45.

58. A communication apparatus, wherein the communication apparatus comprises a module configured to perform the method according to any one of claims 46 to 53.

59. A communication apparatus, comprising a processor and a memory, wherein the memory is configured to store computer instructions, and when the processor executes the instructions, the communication apparatus is enabled to perform the communication method according to any one of claims 1 to 53.

60. A computer-readable storage medium, wherein the computer-readable storage medium comprises a computer program or instructions, and when the computer program or the instructions are run on a computer, the computer is enabled to perform the communication method according to any one of claims 1 to 53.

61. A computer program product, comprising a computer program or instructions, wherein when the computer program or the instructions are run on a computer, the computer is enabled to perform the communication method according to any one of claims 1 to 53.

62. A communication system, comprising one or more of the following:
the communication apparatus according to claim 54;
the communication apparatus according to claim 55; or
the communication apparatus according to claim 56.

63. A communication system, comprising the communication apparatus according to claim 57 and the communication apparatus according to claim 58.

64. A communication method, wherein the method comprises:
determining, by a session management network element, a user plane security rule, wherein the user plane security rule is used to establish an internet protocol security IPsec connection between a first user plane network element and a terminal;
sending, by the session management network element, the user plane security rule to the first user plane network element;
receiving, by the first user plane network element, the user plane security rule from the session management network element; and
establishing, by the first user plane network element, the IPsec connection between the first user plane network element and the terminal according to the user plane security rule.

65. The method according to claim 64, wherein the method comprises:
receiving, by the terminal, security endpoint information from the session management network element; and
establishing, by the terminal, an IPsec connection between the terminal and a security endpoint indicated by the security endpoint information, wherein the security endpoint is the first user plane network element.

66. A communication method, wherein the method comprises:
determining, by a session management network element, a user plane security rule, wherein the user plane security rule is used to establish an IPsec connection between a security network element and a terminal;
sending, by the session management network element, the user plane security rule to the security network element;
receiving, by the security network element, the user plane security rule sent by the session management network element; and
establishing, by the security network element, the IPsec connection between the security network element and the terminal according to the user plane security rule.
